(19) Europäisches Patentamt / European Patent Office / Office européen des brevets

(11) **EP 3 872 947 A1**

(12) **EUROPÄISCHE PATENTANMELDUNG**

(43) Veröffentlichungstag:
**01.09.2021  Patentblatt 2021/35**

(51) Int Cl.:
**H02J 3/00** *(2006.01)*       **H02J 3/16** *(2006.01)*
**H02J 3/18** *(2006.01)*       **H02J 3/38** *(2006.01)*

(21) Anmeldenummer: **21156540.3**

(22) Anmeldetag: **11.02.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **25.02.2020   DE 102020104932**

(71) Anmelder: **Wobben Properties GmbH**
**26607 Aurich (DE)**

(72) Erfinder:
• **Brombach, Johannes**
  **13437 Berlin (DE)**
• **Mackensen, Ingo**
  **26607 Aurich (DE)**
• **Gertjegerdes, Stefan**
  **26603 Aurich (DE)**

(74) Vertreter: **Eisenführ Speiser**
**Patentanwälte Rechtsanwälte PartGmbB**
**Postfach 10 60 78**
**28060 Bremen (DE)**

(54) **VERFAHREN ZUM EINSPEISEN ELEKTRISCHER LEISTUNG MITTELS EINES WINDENERGIESYSTEMS**

(57)     Die Erfindung betrifft ein Verfahren zum Einspeisen elektrischer Leistung (P) an einem Netzanschlusspunkt (118) in ein eine Netzspannung (U) aufweisendes elektrisches Versorgungsnetz (120) mittels eines umrichtergeführten Einspeisers (100; 112; 130), insbesondere eines Windenergiesystems (100; 112) und/oder eines Speichers (133), umfassend die Schritte Einspeisen der elektrischen Leistung (P) in das elektrische Versorgungsnetz (120) in einem Normalbetrieb, wenn kein Netzfehler oder keine Netzstörung im elektrischen Versorgungsnetz (120) erkannt wurde, Umschalten auf einen Fehlerbetrieb, wenn ein Netzfehler oder eine Netzstörung erkannt wurde, bei dem sich die Netzspannung ($U_N$) verringert oder vergrößert, wobei im Normalbetrieb zur Einspeisung elektrischer Wirkleistung (P) ein Wirkstrom ($I_P$) eingespeist wird und bei Bedarf zusätzlich elektrische Blindleistung (Q) durch einen Blindstrom ($I_Q$) eingespeist wird, wobei der Wirkstrom ($I_P$) und der Blindstrom ($I_Q$) zusammen einen Scheinstrom ($\underline{I}$) ergeben, und im Fehlerbetrieb zum Heben oder Senken der Netzspannung ($U_N$) zusätzlicher Blindstrom eingespeist oder dem Betrage nach erhöht wird, wobei ein blindleistungspriorisierter Modus oder ein wirkleistungspriorisierter Modus verwendet wird und der blindleistungspriorisierte Modus dadurch gekennzeichnet ist, dass bei Bedarf der Wirkstrom ($I_P$) so verringert wird, dass der Scheinstrom (I) eine Scheinstromgrenze (504) einhält, und der wirkleistungspriorisierte Modus dadurch gekennzeichnet ist, dass bei Bedarf der Blindstrom ($I_Q$) so begrenzt oder verringert wird, dass der Scheinstrom (I) die Scheinstromgrenze (504) einhält, wobei im blindleistungspriorisierten Modus für den Betrag des Blindstroms ($I_Q$) eine Blindstromobergrenze vorgegeben wird und/oder für den Wirkstrom eine Wirkstromuntergrenze vorgegeben wird, bzw. im wirkleistungspriorisierten Modus für den Wirkstrom ($I_P$) eine Wirkstromobergrenze (524) und/oder für den Blindstrom ($I_Q$) eine betragsmäßige Blindstromuntergrenze (528) vorgegeben wird.

Fig. 5

EP 3 872 947 A1

**Beschreibung**

Die vorliegende Erfindung betrifft ein Verfahren zum Einspeisen elektrischer Leistung in ein elektrisches Versorgungsnetz. Außerdem betrifft die vorliegende Erfindung ein Windenergiesystem zum Ausführen eines solchen Verfahrens. Die Erfindung betrifft auch einen Speicher zum Ausführen eines solchen Verfahrens. Und sie betrifft einen umrichtergeführten Einspeiser zum Ausführen eines solchen Verfahrens.

Windenergieanlagen sind bekannt, sie speisen elektrische Leistung in ein elektrisches Versorgungsnetz ein. Das kann durch eine einzelne Windenergieanlage erfolgen, oder durch einen Windpark, in dem mehrere Windenergieanlagen zusammengefasst sind und über denselben Netzanschlusspunkt in das elektrische Versorgungsnetz einspeisen. Eine Windenergieanlage oder ein Windpark mit mehreren Windenergieanlagen werden hier unter dem Oberbegriff eines Windenergiesystems zusammengefasst. Ein solches Windenergiesystem kann auch einen elektrischen Speicher aufweisen, von dem aus auch in das elektrische Versorgungsnetz eingespeist wird.

Das Einspeisen erfolgt dabei mittels eines Frequenzwechselrichters bzw. eines Umrichters. Daher werden solche Windenergieanlagen bzw. Windparks als auch elektrische Speicher, die mittels eines Umrichters in das elektrische Versorgungsnetz einspeisen, als umrichtergeführte Einspeiser bezeichnet. Im Übrigen kann auch eine Photovoltaikanlage ein umrichtergeführter Einspeiser sein.

Solche umrichtergeführten Einspeiser, insbesondere Windenergiesysteme, haben heutzutage einen zunehmenden Anteil an der Bereitstellung elektrischer Leistung in einem elektrischen Versorgungsnetz, zumindest in manchen elektrischen Versorgungsnetzen. Damit bilden solche umrichtergeführten Einspeiser nicht nur Energielieferanten bzw. Leistungslieferanten, sondern sie werden auch zur elektrischen Stützung des elektrischen Versorgungsnetzes verwendet und übernehmen dabei meist eine wachsende Bedeutung.

Dabei müssen solche umrichtergeführten Einspeiser, besonders moderne Windenergieanlagen und damit auch moderne Windparks, Eigenschaften zur Durchsteuerung eines Netzfehlers aufweisen. Diese Eigenschaften werden auch als FRT-Eigenschaften bezeichnet.

FRT-Eigenschaften moderner Windenergieanlagen sind bekannt und etabliert. Dabei wird besonders mittels einer parametrierbaren Statik bei einem Spannungseinbruch im elektrischen Versorgungsnetz ein zusätzlicher spannungsstützender Blindstrom eingespeist. Dazu sind grundsätzlich 2 Modi bekannt, ein Modus 1 und ein Modus 2, die auch als QU(2)-Mode bzw. QU(UK)-Mode bezeichnet werden können.

Bei beiden Modi wird die Leistung bei einem Fehler bis zur Scheinstromgrenze des Umrichters erhöht. Wird diese erreicht, wird entweder priorisiert ein Blindstrom eingespeist, nämlich im Modus 1, oder priorisiert ein Wirkstrom eingespeist, nämlich im Modus 2.

Es ist bekannt, dass für spannungsweiche Netze eine Blindstrompriorität festgelegt wird, also im Modus 1, um den vollen Blindstrom auszubringen, also einzuspeisen. Das bedeutet, dass die Einspeisung des Blindstroms dem Einspeisen von Wirkstrom vorgeht und wenn der Blindstrom weiter erhöht werden soll, der Wirkstrom zu reduzieren ist, notfalls sogar bis auf 0. Der Wirkstrom wird also reduziert, damit der Blindstrom unter Einhaltung eines vorgegebenen maximalen Scheinstroms noch erhöht werden kann. Dabei liegt der bekannte Zusammenhang zwischen Scheinleistung S, Wirkleistung P und Blindleistung Q gemäß der folgenden Formel zugrunde:

$$S^2 = P^2 + Q^2$$

Der gleiche Zusammenhang gilt natürlich auch für den Scheinstrom einerseits und den Wirkstrom und Blindstrom bzw. Wirkstromanteil und Blindstromanteil andererseits. Aufgrund des quadratischen Zusammenhangs, also der quadratischen Addition kann eine Absenkung des Wirkanteils je nach Betriebspunkt nur zu einer vergleichsweise kleinen Anhebung des Blindanteils führen. Besonders wenn der Wirkanteil bereits klein sein sollte, führt eine weitere Absenkung nur noch zu einer minimalen Erhöhung des Blindanteils.

In frequenzweichen Netzen kann es so aufgrund der Blindstrompriorität bei einem Spannungseinbruch zu einem Frequenzproblem kommen. Hier würde nämlich ein Spannungseinbruch dazu führen, dass die Blindstrompriorität eine Verringerung des Wirkstroms und damit eine Verringerung der eingespeisten Wirkleistung mitunter bis auf 0 hervorrufen kann. Eine Verringerung der eingespeisten Wirkleistung kann aber eine Verringerung der Frequenz zur Folge haben. In frequenzweichen Netzen kann das somit zu einer so starken Frequenzreduzierung führen, dass sich ein Frequenzproblem ergibt.

Bei einer Wirkstrompriorität, also gemäß Methode 2, hat die Wirkstromeinspeisung Priorität und gegebenenfalls muss der Blindanteil reduziert werden bzw. darf nicht erhöht werden, sodass gegebenenfalls gar keine Blindleistung eingespeist wird, wenn dadurch der Wirkstrom erhöht werden kann. Das oben genannte Frequenzproblem kann hierdurch zwar nicht unmittelbar eintreten, hier kann es aber aufgrund der Priorität des Wirkstroms bei einem Spannungseinbruch zu gar keiner Spannungsstützung kommen, oder sogar zu einer Reduktion der schon vordem Fehler eingespeisten Blindleistung. In diesem zweiten Modus versucht die Windenergieanlage also weiterhin bei einbrechender Spannung die gesamte Wirkleistung über einen höheren Strom bis an die Stromgrenze des Umrichters einzuspeisen. Dadurch droht somit ein Spannungskollaps.

Das Deutsche Patent- und Markenamt hat in der Prioritätsanmeldung zu vorliegender Anmeldung folgenden Stand der Technik recherchiert: US 2019/0 093 634 A1 und DE 103 44 392 A1.

Der vorliegenden Erfindung liegt somit die Aufgabe zugrunde, zumindest eines der oben genannten Probleme zu adressieren. Insbesondere soll eine Lösung vorgeschlagen werden, bei der im Fehlerbetrieb eine gute Netzstützung erfolgt, die sowohl das genannte Frequenzproblem als auch das genannte Problem eines potenziellen Spannungskollapses vermeidet. Zumindest soll gegenüber bisher bekannten Lösungen eine alternative Lösung vorgeschlagen werden.

Erfindungsgemäß wird ein Verfahren gemäß Anspruch 1 vorgeschlagen.

Somit wird ein Verfahren zum Einspeisen elektrischer Leistung vorgeschlagen. Das Einspeisen erfolgt an einem Netzanschluss, an dem in ein elektrisches Versorgungsnetz eingespeist wird. Dieses elektrische Versorgungsnetz weist eine Netzspannung auf. Die Netzspannung kann beispielsweise am Netzanschlusspunkt gemessen werden. Das Einspeisen erfolgt mittels eines umrichtergeführten Einspeisers. Ein solcher Einspeiser weist somit zum Einspeisen Umrichter bzw. Wechselrichter auf, die somit gezielt einen elektrischen Strom nach Betrag, Frequenz und Phase erzeugen können.

Solche umrichtergeführten Einspeiser können insbesondere als Windenergiesystem und außerdem oder alternativ als Speicher ausgebildet sein. Dabei kann somit ein Windpark oder eine einzelne Windenergieanlage vorgesehen sein, was beides unter dem Begriff des Windenergiesystems zu verstehen ist. Das umrichtergeführte Einspeisen, also das Einspeisen mittels Umrichter kann besonders auch bedeuten, dass mehrere Umrichter verwendet werden, insbesondere mehrere parallelgeschaltete Umrichter.

Das Verfahren schlägt ein Einspeisen der elektrischen Leistung in das elektrische Versorgungsnetz in einem Normalbetrieb vor, wenn kein Netzfehler oder keine Netzstörung im elektrischen Versorgungsnetz erkannt wurde. Entsprechend führt das Verfahren eine Überwachung des elektrischen Versorgungsnetzes auf Netzfehler bzw. Netzstörungen durch. Nachfolgende Erläuterungen zu Netzfehlern betreffen sinngemäß ebenso Netzstörungen, auch wenn diese nicht ausdrücklich erwähnt sind. Es kann mittels Messens und/oder mittels Auswertens entsprechender von extern erhaltener Signale erfolgen, wie beispielsweise durch das Auswerten von Signalen, die ein Netzbetreiber des elektrischen Versorgungsnetzes übermittelt. Vorzugsweise kann eine solche Überwachung des elektrischen Versorgungsnetzes auf einen Netzfehler auch dadurch erfolgen, dass das Verhalten des umrichtergeführten Einspeisers ausgewertet wird. Ein solcher umrichtergeführter Einspeiser reagiert üblicherweise auf Veränderung im elektrischen Versorgungsnetz und solche Reaktionen, von denen nachfolgend auch noch welche beschrieben werden, lassen auch Rückschlüsse auf das elektrische Versorgungsnetz bzw. einen etwaigen dort aufgetretenen Fehler zu.

Es kann auch sein, dass es einen Netzfehler im elektrischen Versorgungsnetz gibt, der aber unbeachtlich ist oder aus anderen Gründen, weil er beispielsweise zu weit weg ist, keine Berücksichtigung findet. Insoweit geht es bei dem Einspeisen im Normalbetrieb darum, dass ein Netzfehler nicht erkannt wurde.

Weiter wird vorgeschlagen, dass auf einen Fehlerbetrieb umgeschaltet wird, wenn ein Netzfehler oder eine Netzstörung erkannt wurde. Ein solches Umschalten auf einen Fehlerbetrieb wird dann vorgeschlagen, wenn es sich um einen solchen Netzfehler oder eine solche Störung handelt, bei dem bzw. bei der sich die Netzspannung verringert oder vergrößert. Insbesondere wird somit auf einen Spannungseinbruch oder eine Spannungsüberhöhung überwacht. Ein Spannungseinbruch ist besonders ein solches Absinken der Netzspannung, dass sie dabei unter einen vorbestimmten unteren Spannungsgrenzwert der Netzspannung absinkt. Bei einer Spannungsüberhöhung steigt die Netzspannung über einen oberen Spannungsgrenzwert.

Eine Betrachtung von Überspannungen ist besonders dann sinnvoll, wenn der blind-strompriorisierte Modus vorliegt. Es wurde erkannt, dass bei einem Durchfahren eines Überspannungsfehlers (OVRT) zwar der Wirkstrom proportional mit der Spannung sinkt, wenn eine feste Wirkleistung gehalten wird, der Blindstrom dennoch so stark ansteigen kann, dass eine Beschränkung bzw. Verringerung des Wirkstroms und damit der Wirkleistung nötig werden kann. Das ist besonders dann der Fall, wenn große Verstärkungen bzw. Verstärkungsfaktoren zwischen Spannungsabweichung und einzuspeisender Blindleistung verwendet werden, die auch als k-Faktoren bezeichnet werden. Dann kann es nämlich trotzdem zu einem so hohen Blindstrom kommen, dass der Wirkstrom bzw. im Ergebnis die Wirkleistung zu reduzieren ist. Auch hierzu wird vorgeschlagen, den Wirkstrom aber nicht auf den Wert null zu reduzieren. Ebenso können Unterspannungen bzw. Spannungseinbrüche zu einem dem Betrage nach erhöhten Blindstrom führen, um die Spannung anzuheben. Der Blindstrom unterscheidet sich gegenüber dem Fall, wenn er spannungssenkend wirken soll, aber in seiner Phasenlage. Anschaulich gesprochen ist der im Vergleich dazu negativ, das wird auch als "Absorption" bezeichnet. Es tritt dennoch das Problem auf, dass ein maximaler Scheinstrom überschritten werden kann.

Es wird vorgeschlagen, dass im Normalbetrieb zur Einspeisung elektrischer Wirkleistung ein Wirkstrom eingespeist wird und, dass bei Bedarf zusätzlich elektrische Blindleistung durch einen Blindstrom eingespeist wird. Der Wirkstrom und der Blindstrom ergeben zusammen einen Scheinstrom, besonders über den bekannten Zusammenhang aus $I^2_S = I^2_P + I^2_Q$. In dieser Formel bilden $I_S$, $I_P$ und $I_Q$ den Scheinstrom, Wirkstrom bzw. Blindstrom.

Ein Blindstrom kann zur Spannungsstützung eingespeist werden, also zur Spannungshebung, bei umgekehrtem Vorzeichen aber auch zur Spannungssenkung. Es kommt aber auch in Betracht, dass zumindest anfänglich kein Blindstrom eingespeist wird.

Für einen Fehlerbetrieb wird vorgeschlagen, dass zum Heben oder Senken der Netzspannung zusätzlicher Blindstrom eingespeist wird, nämlich mit entsprechender Phasenlage. Das kann auch etwas vereinfacht ausgedrückt, als Einspeisen mit unterschiedlichem Vorzeichen bezeichnet werden. Ein entsprechendes Einspeisen wird zum Heben der Netzspannung auch als "Generation" und zum Senken der Netzspannung als "Absorption" bezeichnet. Durch das Einspeisen zusätzlichen Blindstromes wird der Blindstrom somit dem Betrage nach erhöht.

Dabei sind zwei unterschiedliche Modi vorgesehen. Es wird nämlich vorgeschlagen, dass ein blindleistungspriorisierter Modus oder ein wirkleistungspriorisierter Modus verwendet wird und der blindleistungspriorisierte Modus dadurch gekennzeichnet ist, dass bei Bedarf der Wirkstrom so verringert wird, dass der Scheinstrom eine Scheinstromgrenze einhält, und der wirkleistungspriorisierte Modus dadurch gekennzeichnet ist, dass bei Bedarf der Blindstrom so begrenzt oder verringert wird, dass der Scheinstrom die Scheinstromgrenze einhält, Zur Einhaltung einer Scheinstromgrenze kann es somit vorkommen, dass von Wirkstrom und Blindstrom, aus dem sich der Scheinstrom zusammensetzt, nur noch einer auf Kosten des anderen erhöht werden kann. Im blindleistungspriorisierten Modus geht dann der Blindstrom vor, er wird dann also ggf. auf Kosten des Wirkstromes erhöht. Im wirkstrompriorisierten Modus ist es umgekehrt, da geht der Wirkstrom vor, so dass ggf. der Blindstrom dem Betrage nach begrenzt oder verringert wird.

Im blindleistungspriorisierten Modus wird der Wirkstrom so verringert, dass der Scheinstrom eine Scheinstromgrenze einhält. Hier liegt der Gedanke zugrunde, dass das betragsmäßige Erhöhen des zusätzlich eingespeisten Blindstroms bei gleichzeitiger Erhöhung des Wirkstroms oder zumindest Nichtabsenkung des Wirkstroms der Scheinstrom an seine Scheinstromgrenze stoßen würde und auch darüber hinaus steigen würde, bis entsprechende Sicherungsschütze ansprechen und die Stromleitung mechanisch unterbrechen oder ein Halbleiterschutz die Halbleiter abschalten würde, wenn die physikalischen Grenzen des Halbleiters erreicht werden. Das ist natürlich nicht erwünscht und entsprechend wird so gesteuert, dass diese Situation vermieden wird. Dazu wird nämlich der Wirkstrom so verringert, dass der Scheinstrom diese Scheinstromgrenze einhält, sie also nicht überschreitet.

Alternativ ist der wirkleistungspriorisierte Modus vorgesehen. Im Fehlerbetrieb und bei der Variante des wirkleistungspriorisierten Modus wird ein Blindstrom zum Heben der Netzspannung erhöht und dann Wirkstrom erhöht, um aktuell geforderte und/oder bis dahin eingespeiste Wirkleistung möglichst zu halten, denn bei geringerer Spannung bedarf es mehr Strom, um die Leistungshöhe zu halten. Es kommt aber auch eine Erhöhung des Wirkstromes im Falle der Überspannung in Betracht, besonders wenn mehr Leistung gefordert wird. Wenn dabei eine Scheinstromgrenze erreicht wird, die den gleichen Wert betragen kann wie die Scheinstromgrenze im blindleistungspriorisierten Modus, wird Blindstrom verringert, um bei weitersteigender Wirkstromerhöhung die Scheinstromgrenze einzuhalten. Insoweit können diese beiden Modi vorliegen, nämlich der blindleistungspriorisierte Modus, der nämlich eine Priorisierung des Blindstroms fordert, und ein wirkleistungspriorisierter Modus, der eine Priorisierung des Wirkstroms fordert.

In dem blindleistungspriorisierten Modus wird vorgeschlagen, dass für den Betrag des Blindstroms eine Blindstromobergrenze vorgegeben wird und außerdem oder alternativ für den Wirkstrom eine Wirkstromuntergrenze vorgegeben wird. Dadurch wird erreicht, dass in dem blindleistungspriorisierten Modus weiterhin der Blindstrom priorisiert wird, der Wirkstrom also verringert werden kann, um dadurch unter Einhaltung der Scheinstromgrenze das Einspeisen von noch mehr Blindstrom zu ermöglichen, dass aber Grenzen gesetzt werden, sodass vermieden wird, dass der Wirkstrom ganz auf null absinkt.

Hier wurde besonders erkannt, dass auf Grund der bereits genannten Gleichung, die den Zusammenhang zwischen Scheinstrom, Wirkstrom und Blindstrom angibt, eine Verringerung des Wirkstroms gänzlich bis auf null, beispielsweise für die letzten 10 % bezogen auf einen Nennwirkstrom, oder bezogen auf die Scheinstromgrenze, fast keine Erhöhung des Blindstroms mehr möglich macht. Es wurde also erkannt, dass durch diese Grenzsetzung der Fall verhindert werden kann, dass ein großer Schaden durch die vollständige Absenkung des Wirkstroms auf null vermieden wird, der aber keinen nennenswerten Einfluss auf den Blindstrom hat. Das kann natürlich auch dadurch erreicht werden, dass ein entsprechender Grenzwert des Blindstroms vorgegeben wird, insbesondere als Blindstromobergrenze, der nicht überschritten werden darf. Eine Untergrenze für den Wirkstrom wäre zu bevorzugen, da hier die Messgenauigkeit höher bzw. Einstellmöglichkeit genauer sein kann.

Sinngemäß wird für den wirkleistungspriorisierten Modus vorgeschlagen, für den Wirkstrom eine Wirkstromobergrenze und/oder für den Blindstrom eine betragsmäßige Blindstromuntergrenze vorzugeben. Es kann also im wirkleistungspriorisierten Modus dann weiterhin eine wirkstrompriorisierte Steuerung vorgesehen sein, die auch als wirkstrompriorisierte Fahrweise bezeichnet werden kann, aber ein vollständiges Absenken des Blindstroms auf null wird vermieden. Da der Blindstrom sowohl durch positives Einspeisen (Generation) als auch durch positives Entnehmen von Blindstrom aus dem elektrischen Versorgungsnetz (Absorption) eine Spannungsstützung durchführen kann, wird vorgeschlagen, die Blindstromuntergrenze betragsmäßig vorzugeben.

Gemäß einer Ausführungsform wird vorgeschlagen, dass im Fehlerbetrieb vom blindleistungspriorisierten Modus in den wirkleistungspriorisierten Modus umgeschaltet wird, oder umgekehrt. Das hängt natürlich davon ab, welcher Modus vor der Umschaltung vorgelegen hat. Insbesondere wird vorgeschlagen, dass beim Erreichen einer vorgegebenen ersten Stromgrenze, insbesondere einer Scheinstromgrenze, der Blindstromobergrenze oder der Wirkstromuntergrenze vom blindleistungspriorisierten Modus in den wirkleistungspriorisierten Modus umgeschaltet wird, oder beim Erreichen einer vorgegebenen zweiten Stromgrenze, insbesondere der Scheinstromgrenze, der Wirkstromobergrenze oder der Blindstromuntergrenze vom wirkleistungspriorisierten Modus in den blindleistungspriorisierten Modus umgeschaltet wird. Neben den genannten vorgegebenen Stromgrenzen können als erste und zweite Stromgrenze auch andere Grenzen vorgegeben werden, z.B. eine, die um 1 bis 10% unter der Scheinstromgrenze liegt. Dadurch kann erreicht werden, dass die vorgeschlagene Umschaltung rechtzeitig erfolgt.

Ein solches Umschalten wird besonders beim Durchfahren eines Netzfehlers, wie dem Durchfahren eines Überspannungsfehlers (OVRT) oder dem Durchfahren eines Fehlers niedriger Spannung (LVRT) vorgeschlagen.

Es kann besonders eine Situation auftreten, bei der die Netzspannung am Netzanschlusspunkt schon hoch ist, z.B. bedingt oder teilweise bedingt durch eine Einspeisung von Wirkleistung. In dieser Situation kann bereits Blindleistung als spannungssenkende Maßnahme eingespeist werden, insbesondere mit einer so hohen Amplitude, dass diese Blindleistungseinspeisung nahe an einem möglichen Maximum liegt. Das kann das Ergebnis einer Regelung sein, die die genannte hohe Spannung herunterregeln will.

In diesem Fall kann zudem die Situation vorliegen, dass der umrichtergeführte Einspeiser, insbesondere ein Windpark, in einem wirkleistungspriorisierten Modus einspeist. Insoweit kann ein solcher wirkleistungspriorisierter Modus, gleiches gilt sinngemäß für den blindleistungspriorisierten Modus, auch in einem Normalbetrieb eingestellt sein und verwendet werden.

Tritt nun als Fehlerbetrieb ein Überspannungsfehler als Netzfehler auf, der zu durchfahren ist, würde die Wirkleistung gleich bleiben, denn die ist vorgegeben. Aufgrund der erhöhten Netzspannung würde dazu der Wirkstrom aber etwas absinken. Der Einspeiser würde einen spannungssenkenden Blindstrom einspeisen, bzw. den Blindstrom, der bereits zum Spannungssenken eingespeist wird, dem Betrage nach erhöhen.

Kommt der Einspeiser an die Stromgrenze, nämlich die Scheinstromgrenze, kann die Blindleistung bzw. der Blindstrom nicht weiter erhöht werden.

Daher wird nun vorgeschlagen, dass von dem wirkleistungspriorisierten Modus in den blindleistungspriorisierten Modus umgeschaltet wird. Hier liegt die Erkenntnis zu Grunde, dass eine Trennung des Einspeisers vom elektrischen Versorgungsnetz droht, wenn die Spannung zu hoch wird. Tritt ein solcher Fall ein, kann gar keine Leistung mehr eingespeist werden. Somit führt in diesem Fall das Umschalten vom wirkleistungspriorisierten Modus in den blindleistungspriorisierten Modus dazu, dass mehr Wirkleistung eingespeist werden kann, als wenn der Einspeiser im wirkleistungspriorisierten Modus bleiben würde, der zu einer Netztrennung geführt hätte. Dann könnte nämlich gar keine Wirkleistung eingespeist werden. Durch das Umschalten auf den blindleistungspriorisierten Betrieb, der aber durch die Vorgabe der Wirkstromuntergrenze bzw. Blindstromobergrenze sicherstellt, dass wenigstens etwas Wirkleistung eingespeist wird, kann somit wenigstens etwas Wirkleistung eingespeist werden.

Sinngemäß kann in einer anderen Situation auch die Umschaltung von einem blindleistungspriorisierten Modus in einen wirkleistungspriorisierten Modus vorteilhaft sein, wenn der blindleistungspriorisierte Modus zu einer Trennung des Einspeisers vom Netz führen würde, während der wirkleistungspriorisierte Modus das verhindert hätte. Ein solches Umschalten wird besonders dann vorgeschlagen, wenn die Netzfrequenz eine vorgebbare Umschaltfrequenz unterschreitet. Die Umschaltfrequenz wird in einem Bereich unterhalb der Netznennfrequenz vorgegeben, insbesondere im Bereich von 0,2 bis 2% der Netznennfrequenz unterhalb der Netznennfrequenz.

Gemäß einer Ausführungsform wird vorgeschlagen, dass wenigstens eine der Stromgrenzen der Blindstromobergrenze, der Wirkstromuntergrenze, der Wirkstromobergrenze und der Blindstromuntergrenze dynamisch veränderbar ist.

Durch die Stromgrenzen wird verhindert, dass je nach Priorisierung der Blindstrom oder der Wirkstrom, also der jeweils nicht priorisierte Strom, vollständig auf den Wert null reduziert wird. Damit wird erreicht, dass der jeweils nicht priorisierte Strom noch eine Stützwirkung entfalten kann. Aber sowohl der Bedarf an einer entsprechenden Stützwirkung des nicht priorisierten Stroms als auch die Möglichkeit, einen solchen bereitzustellen, können situationsbedingt unterschiedlich hoch sein. Besonders kann dies von einem Arbeitspunkt des umrichtergeführten Einspeisers abhängen. Weist der Arbeitspunkt beispielsweise eine vergleichsweise geringe Scheinleistung auf, beispielsweise zusammengesetzt aus einem niedrigen Wirkstromanteil und einem niedrigen Blindstromanteil, so weist damit der nicht priorisierte Stromanteil bereits einen geringen Wert auf, sodass er auch auf einen geringeren Absolutwert reduziert werden könnte, ohne dass dies zu starke negative Auswirkungen zur Folge hätte.

Insbesondere kann die jeweilige Stromgrenze in Abhängigkeit von einer als Eigenschaft des elektrischen Versorgungsnetzes identifizierten Netzeigenschaft eingestellt werden. Je nach Netzeigenschaft kann der Bedarf an einer Stützung des elektrischen Versorgungsnetzes durch den verbleibenden nicht priorisierten Stromanteil unterschiedlich ausfallen. Daran kann die entsprechende Stromgrenze angepasst werden. Besonders kann als identifizierte Netzeigenschaft eine Netzstarrheit betrachtet werden, die weiter unten noch erläutert wird. Als identifizierte Netzeigenschaft, die betrachtet wird, kommt auch eine Netzsensitivität in Betracht, oder ein Kurzschlussstromverhältnis, beides jeweils bezogen auf den Netzanschlusspunkt.

Gemäß einer Ausführungsform wird vorgeschlagen, dass wenigstens eine der Stromgrenzen ab dem Umschalten auf den Fehlerbetrieb erst nach einer vorbestimmten Wartezeit eingestellt oder wirksam wird. Eine solche Wartezeit liegt vorzugsweise im Bereich von 2ms bis 100ms. Insbesondere im Bereich von 5ms bis 50ms. Das verzögerte Wirksamwerden kann auch dadurch realisiert werden, dass die betreffenden Stromgrenzen erst nach der Wartezeit bei der jeweiligen Einheit, die sie umsetzen soll, berücksichtigt werden.

Hier wurde erkannt, dass im blindleistungspriorisierten Modus zunächst die Blindleistung bzw. der Blindstrom eingestellt bzw. geregelt oder gesteuert wird, und anschließend, insbesondere durch einen überlagerten Regler, die Wirkleistung bzw. der Wirkstrom gesteuert oder geregelt wird. Es wurde daher erkannt, dass es anfangs sinnvoll sein kann, für den Wirkstrom noch keine Untergrenze einzustellen, bzw. sie noch nicht wirksam werden zu lassen, bzw. noch nicht zu berücksichtigen, weil die Situation, nämlich besonders der Prioritätskonflikt, noch nicht auftritt oder noch von geringer Relevanz ist. Gleiches gilt für die Blindstromobergrenze, wenn diese vorgegeben wir, um zu vermeiden, dass gar kein Wirkstrom eingespeist wird. In der Zeit kann die Blindleistung bzw. der Blindstrom noch frei geregelt werden.

Sinngemäß ist dieser Gedanke auch für den Fall des wirkleistungspriorisierten Modus vorgesehen. Wenn hier zunächst die Wirkleistung bzw. der Wirkstrom gesteuert wird, und erst anschließend, insbesondere als überlagerte Regelung, die Blindleistung bzw. der Blindstrom gesteuert oder geregelt wird, kann bis dahin das Einstellen oder Wirksamwerdenlassen der entsprechenden Stromgrenze unterbleiben, also das Einstellen oder Wirksamwerdenlassen der Wirkstromobergrenze und/oder Blindstromuntergrenze. In der Zeit kann die Wirkleistung bzw. der Wirkstrom noch frei geregelt oder eingestellt werden.

Alternativ können die Stromgrenzen auch als feste Grenzen implementiert werden. Dadurch wird besonders eine einfache und stabile Implementierung erreicht. Es wird sicher verhindert, dass im blindleistungspriorisierten Modus der Wirkstrom versehentlich doch auf 0 gezwungen wird, oder im wirkleistungspriorisierten Modus der Blindstrom auf 0 gezwungen wird.

Gemäß einer Ausführungsform wird vorgeschlagen, dass wenigstens eine der Stromgrenzen an eine externe Einheit, insbesondere einen Netzbetreiber übertragen wird. Die externe Einheit ist insbesondere als externe Steuereinheit ausgebildet, insbesondere, um das elektrische Versorgungsnetz oder einen Netzabschnitt davon zu steuern. Die externe Einheit ist somit eine Einheit, die nicht Teil des umrichtergeführten Einspeisers ist. Sie kann aber dem umrichtergeführten Einspeiser, bspw. Sollwerte mittelbar, oder unmittelbar vorgeben, wobei sie auch andere Einheiten im elektrischen Versorgungsnetz steuert, insbesondere Einspeiser, die nicht umrichtergeführt sind, und/oder Schaltmittel im elektrischen Netz zum Verbinden oder Trennen von Netzabschnitten. Durch die Übertragung dieser Informationen an die externe Einheit kann diese besonders die Steuerung und/oder Überwachung des elektrischen Versorgungsnetzes besser durchführen, insbesondere besser planen.

Insbesondere wird vorgeschlagen, dass die Blindstromobergrenze und/oder die Wirkstromuntergrenze in Abhängigkeit von aktuell für den umrichtergeführten Einspeiser verfügbarer Wirkleistung eingestellt wird. Das betrifft somit den blindleistungspriorisierten Modus, also den Modus, in dem der Blindstrom priorisiert wird. Sofern der umrichtergeführte Einspeiser ein Windenergiesystem ist, also eine Windenergieanlage oder ein Windpark, so kann die Blindstromobergrenze bzw. die Wirkstromuntergrenze somit von der verfügbaren Windleistung abhängen. Aber auch in dem Fall, dass der umrichtergeführte Einspeiser ein Speicher ist, oder einen umfasst, kann für diesen unterschiedlich viel Wirkleistung verfügbar sein, nämlich zum Einspeisen in das elektrische Versorgungsnetz verfügbar sein. Das kann besonders vom Ladezustand des Speichers abhängen, sodass beispielsweise abhängig von dem Ladezustand auch nur eine zugeordnete Speicherleistung bereitgestellt werden kann, oder bereitgestellt werden darf.

Besonders wird vorgeschlagen, dass die Blindstromobergrenze umso höher ist, je geringer die für den umrichtergeführten Einspeiser verfügbare Wirkleistung ist. Entsprechend wird vorgeschlagen, dass die Wirkstromuntergrenze umso geringer ist, je weniger Wirkleistung für den umrichtergeführten Einspeiser verfügbar ist. Hier wurde erkannt, dass auch bei geringer verfügbarer Wirkleistung gleichwohl ein sehr hoher Blindstrom eingespeist werden kann. Dazu wurde erkannt, dass es dann nicht sinnvoll erscheint, die Wirkstromuntergrenze auf einen Wert festzulegen, der oberhalb eines aufgrund der verfügbaren Wirkleistung einspeisbaren Wirkstroms liegt. Entsprechend wurde auch erkannt, dass das Vorgeben einer entsprechenden Blindstromobergrenze, die nämlich faktisch zu einer entsprechenden Wirkstromuntergrenze führt, ebenso wenig zweckmäßig ist. Daher wird vorgeschlagen, die Blindstromobergrenze bzw. die Wirkstromuntergrenze entsprechend anzupassen.

Zur Umsetzung wird bspw. vorgeschlagen, den betreffenden Strom (Wirkstrom oder Blindstrom) auf einen vorgegebenen Anteil eines aktuellen (oder eines mittleren Stroms) festzulegen, z.B. einen Mindeststrom auf 90 % des aktuellen (oder des mittleren Stroms) festzulegen.

Es ist somit auch denkbar, die Wirkstromgrenze von der aktuellen Wirkleistung und der Spannung abhängig zu machen. So kann z.B. im wirkleistungspriorisierten Modus vorgesehen sein, dass die Wirkleistung auf 80 % absinken darf, so dass die Wirkstromgrenze also aus der Spannung und der Wirkleistungsgrenze berechnet wird. Alternativ kann vorgesehen sein, die Wirkstromgrenze als 80 % des aktuellen Wirkstroms zu berechnen, um bei dem Beispiel zu bleiben.

Für diese und auch alle anderen, den blindleistungspriorisierten Modus betreffenden Ausführungsformen, wird vorgeschlagen, dass die Wirkstromuntergrenze maximal 30 % des maximalen Scheinstroms beträgt. Hier wurde besonders erkannt, dass ein Wirkstrom in Höhe von 30 % des Scheinstroms noch ein signifikant hoher Strom ist, der gleichwohl den Blindstrom kaum begrenzt. Der Blindstrom würde hierbei etwa auf 95 % des maximalen Scheinstroms beschränkt. Dieser um 5 % verringerte maximale Blindstrom erreicht somit, dass aber bis zu 30 % des maximalen Wirkstroms noch eingespeist werden kann. Entsprechend wird vorgeschlagen, dass die Blindstromobergrenze, falls also diese statt der Wirkstromuntergrenze vorgegeben wird, wenigstens 95 % des maximalen Scheinstroms beträgt.

In jedem Fall wird aber vorgeschlagen, dass sowohl die Wirkstromuntergrenze als auch die Blindstromuntergrenze auf einen Wert größer als null eingestellt werden, und die Blindstromobergrenze und die Wirkstromobergrenze auf einen Wert unter 100 % des maximalen Scheinstroms eingestellt wird. Natürlich braucht nur jeweils diejenige Grenze eingestellt zu werden, die auch zur Anwendung kommt.

Gemäß einer Ausführungsform wird vorgeschlagen, dass im Fehlerbetrieb im blindleistungspriorisierten Modus eine Blindstromstatik vorgegeben wird, die einen Blindstrom in Abhängigkeit von der Netzspannung vorgibt, wobei die Blindstromstatik einen linearen Zusammenhang zwischen der Netzspannung und dem Blindstrom angibt, mit einer Blindstromsteigung, die ein Verhältnis einer Blindstromänderung zu einer zugehörigen Netzspannungsänderung bezeichnet. Insbesondere kann aber ein Totbandbereich vorgesehen sein, der nämlich einen Spannungsbereich angibt, in dem der Blindstrom nicht ansteigt, insbesondere auf einem Wert null bleibt. Außerhalb dieses Totbandbereichs steigt somit der Blindstrom proportional mit einer Spannungserhöhung bzw. fällt mit einer Spannungsverringerung. Dadurch kann der Spannungserhöhung bzw. Spannungsverringerung durch den Blindstrom entgegengewirkt werden.

Dabei steigt der Blindstrom, betragsmäßig, maximal bis zur Blindstromobergrenze an. Der Blindstrom bleibt somit betragsmäßig unter dem maximalen Scheinstrom. Die Blindstromstatik wird somit auf diese Blindstromobergrenze begrenzt.

Außerdem oder alternativ wird zu dieser Ausführungsform vorgeschlagen, dass zum Einhalten eines maximal zulässigen Scheinstromes ein eingespeister Wirkstrom reduziert wird. Wenn also das Ansteigen des Blindstroms aufgrund der Blindstromstatik dazu führt, dass der zusammen mit dem Wirkstrom resultierende Scheinstrom an die Scheinstromgrenze stößt, würde dann der Wirkstrom reduziert werden, um für das Umsetzen der Blindstromstatik einen höheren Blindstrom zu ermöglichen. Es wird aber vorgeschlagen, dass der Wirkstrom nicht unter die Wirkstromuntergrenze reduziert wird. Insoweit wird der Ausführung der Blindstromstatik Priorität eingeräumt, aber nur so weit, dass der Wirkstrom nicht unter die Wirkstromuntergrenze abfällt. Idealerweise würde der Blindstrom dann eine Blindstromobergrenze erreichen. Es ist aber ausreichend, entweder eine Blindstromobergrenze, oder eine Wirkstromuntergrenze vorzugeben. Es können aber auch beide Grenzen vorgegeben werden und sollten bei entsprechender Vorgabe zugleich erreicht werden.

Dazu wird weiter vorgeschlagen, dass im Normalbetrieb ebenfalls eine Blindstromstatik mit einer Blindstromsteigung vorgegeben wird, und die Blindstromsteigung im Fehlerbetrieb größer ist als im Normalbetrieb. Für den Fehlerbetrieb wird somit eine steilere Blindstromstatik vorgeben, der auch eine Priorität gegenüber dem Wirkstrom eingeräumt wird, für die der Wirkstrom aber nicht bis auf null reduziert wird. Es wurde erkannt, dass durch die steilere Blindstromstatik besonders einem entsprechenden Spannungsereignis entgegengewirkt werden kann, durch die Begrenzung dieser Blindstromstatik, nämlich durch die Blindstromobergrenze bzw. die Wirkstromuntergrenze, aber ein Reduzieren des Wirkstroms auf null vermieden wird, ohne dass dadurch die Spannungsstützung durch die Blindstromstatik nennenswert beeinflusst werden würde.

Vorzugsweise ist für den Normalbetrieb eine geringere Blindstromobergrenze bzw. eine höhere Wirkstromuntergrenze vorgesehen, als im Fehlerbetrieb.

Gemäß einer Ausführungsform wird vorgeschlagen, dass für das elektrische Versorgungsnetz, ein Teilnetz oder einen lokalen Netzabschnitt, eine Netzstarrheit als Netzeigenschaft ermittelt wird, wobei die Netzstarrheit ein Maß dafür ist, wie stark sich die Netzfrequenz ändert, als Reaktion auf eine Veränderung einer Leistungsbilanz im elektrischen Versorgungsnetz. Eine Leistungsbilanz ist daher ein Verhältnis in das elektrische Versorgungsnetz, das Teilnetz, bzw. den lokalen Netzabschnitt eingespeister Leistung zu daraus entnommener Leistung. Die Netzstarrheit beschreibt also, wie stark die Netzfrequenz darauf reagiert, dass sich das Verhältnis von eingespeister Leistung zu entnommener Leistung verschiebt, insbesondere sich aus einem Gleichgewicht herausbewegt, bei dem die entnommene Leistung der eingespeisten Leistung entspricht. Je weniger die Frequenz auf eine solche Veränderung der Leistungsbilanz reagiert, umso starrer ist das Netz. Diese Netzstarrheit kann auch als Frequenzstarrheit bezeichnet werden.

Insbesondere kann die Netzstarrheit als Quotient einer Netzfrequenzänderung zu einer Leistungsbilanzänderung sein.

Dazu wird nun vorgeschlagen, dass wenigstens eine Stromgrenze, also die Blindstromobergrenze, die Wirkstromuntergrenze, die Wirkstromobergrenze und/oder die Blindstromuntergrenze, in Abhängigkeit von der Netzstarrheit eingestellt wird. Insbesondere wird vorgeschlagen, dass die Blindstromobergrenze oderdie Wirkstromobergrenze umso höher eingestellt wird, je starrer das Netz ist bzw., dass die Wirkstromuntergrenze oder die Blindstromuntergrenze umso niedriger eingestellt wird, je starrer das Netz ist. Hier liegt die Erkenntnis zugrunde, dass bei frequenzweichen Netzen ein höherer Umrichteranteil vorhanden ist und daher bei frequenzweichen Netzen das Absenken der genannten Stromuntergrenzen bzw. Anheben der genannten Stromobergrenzen jeweils zu einer besonders starken Priorisierung führt, wodurch im Gegenzug der jeweils nicht priorisierte Strom nur noch einen sehr geringen Anteil hat. Tritt nun ein Fehlerbetrieb ein, besteht die Gefahr, dass der jeweils nicht priorisierte Strom seine Aufgaben nur noch sehr schwach ausführen kann. Ist der Umrichteranteil in dem entsprechenden elektrischen Versorgungsnetz hoch, tritt dieses Problem bei sehr vielen Einspeisern auf, das Problem hat also einen hohen Anteil und kann daher zu einem entsprechend großen, wie eingangs beschriebenen, Problem führen. Um das abzuschwächen wird somit bei frequenzweichen Netzen vorgeschlagen, die Stromgrenzen so zu legen, dass ein möglichst hoher Anteil des nicht priorisierten Stroms verbleibt.

Vorzugsweise wird das elektrische Versorgungsnetz bzw. das Teilnetz oder der lokale Netzabschnitt in Abhängigkeit von der Netzstarrheit in ein weiches oder starres Netz klassifiziert und die wenigstens eine Stromgrenze in Abhängigkeit von dieser Klassifizierung eingestellt. Dadurch kann generell ein Schwerpunkt für die Wahl der Stromgrenzen gesetzt werden, und besonders dann, wenn eine solche Klassifizierung und entsprechende Wahl der Stromgrenzen bei vielen umrichtergeführten Einspeisern desselben Versorgungsnetzes, Teilnetzes bzw. Netzabschnitts durchgeführt werden, kann durch die Klassifizierung eine bessere Planungssicherheit erreicht werden. Besonders wird vorgeschlagen, die Einteilung und resultierende Wahl der Stromgrenzen einer externen Einheit, insbesondere einem Netzbetreiber, mitzuteilen. Überhaupt wird für jegliche Ausführungsformen vorgeschlagen, der externen Einheit, insbesondere dem Netzbetreiber, die jeweils gewählten Stromgrenzen, also die Blindstromobergrenze, die Wirkstromuntergrenze, die Wirkstromobergrenze und/oder die Blindstromuntergrenze mitzuteilen.

Außerdem oder alternativ wird vorgeschlagen, dass die wenigstens eine Stromgrenze in Abhängigkeit von einem Anteil umrichtergeführter Einspeiser des elektrischen Versorgungsnetzes vorgegeben wird. Dazu wurde weiter oben bereits erläutert, dass der Anteil umrichtergeführter Einspeiser Einfluss auf das Verhalten und damit die Charakteristik des elektrischen Versorgungsnetzes insgesamt haben kann und entsprechend unterschiedlich gewählte Stromgrenzen sinnvoll sein können. Jedenfalls wurde das erkannt und die Einstellung wenigstens einer der Stromgrenzen in Abhängigkeit von dem Anteil umrichtergeführter Einspeiser vorgeschlagen.

Außerdem oder alternativ wird vorgeschlagen, dass die Netzstarrheit in Abhängigkeit von einem Anteil umrichtergeführter Einspeiser des elektrischen Versorgungsnetzes ermittelt wird. Das hat besonders den Vorteil, dass Messungen zur Ermittlung der Netzstarrheit aufwendig sein können und stattdessen der Anteil umrichtergeführter Einspeiser im Wesentlichen bekannt ist. Insbesondere, wenn die umrichtergeführten Einspeiser eine entsprechende Information an eine zentrale Einheit des elektrischen Versorgungsnetzes, Teilnetzes oder Netzabschnittes geben, kann eine solche Information leicht erhalten und verarbeitet werden.

Es kommt aber auch in Betracht, dass seitens einer zentralen Einheit Leistungssollwerte an die umrichtergeführten Einspeiser übergeben werden und sich daraus, in der Annahme, dass sich die umrichtergeführten Einspeiser nach der Vorgabe richten, der Anteil umrichtergeführter Einspeiser ermitteln lässt. Insbesondere wird für diese und alle anderen entsprechenden Ausführungsformen vorgeschlagen, dass der Anteil umrichtergeführter Einspeiser definiert ist als Quotient der elektrischen Leistung, die von den umrichtergeführten Einspeisern in das elektrische Versorgungsnetz eingespeist wird, zu der insgesamt in das elektrische Versorgungsnetz eingespeisten Wirkleistung. Alternativ kann auch die durch die umrichtergeführten Einspeiser einspeisbare Leistung ins Verhältnis gesetzt werden zu insgesamt in das elektrische Versorgungsnetz einspeisbaren Leistung. All diese Definitionen gelten sinngemäß für das genannte Teilnetz oder den lokalen Netzabschnitt ebenfalls.

Gemäß einer Ausführungsform wird vorgeschlagen, dass in Abhängigkeit von einer lokalen Frequenzweichheit am Netzanschlusspunkt die wenigstens eine Stromgrenze gewählt wird, und außerdem oder alternativ die Blindstromsteigung der Blindstromstatik festgelegt wird. Eine lokale Frequenzweichheit am Netzanschlusspunkt liegt vor, wenn die Netzfrequenz am Netzanschlusspunkt mit einer größeren Amplitude schwingt als an einem Referenzpunkt des elektrischen Versorgungsnetzes. Insbesondere wenn die Netzfrequenz am Netzanschlusspunkt wenigstens mit einer doppelt so großen Amplitude schwingt wie an dem Referenzpunkt.

Eine lokale Frequenzweichheit liegt besonders auch dann vor, und das kann eine eigenständige oder ergänzende Definition sein, wenn in einem Netzabschnitt des elektrischen Versorgungsnetzes eine lokale Spannungsweichheit vorliegt, und in dem Netzabschnitt ein geringer Grad an spannungsprägenden Einspeisern vorliegt.

Dabei sind direkt mit dem Netzabschnitt gekoppelte Synchrongeneratoren auch als spannungsprägende Einspeiser anzusehen.

Eine lokale Spannungsweichheit liegt besonders dann vor, wenn eine prozentuale Leistungsänderung der in den Netzabschnitt eingespeisten Leistung in Bezug auf eine resultierende prozentuale Spannungsänderung der Netzspannung an einem Referenzpunkt in diesem Netzabschnitt einen vorbestimmten Vergleichswert für lokale Spannungsweichheit unterschreitet. Insbesondere wird als vorbestimmten Vergleichswert für lokale Spannungsweichheit ein Wert von 10 oder kleiner vorgegeben. Bei einem Wert von 10 liegt somit dann eine lokale Spannungsweichheit vor, wenn die in den Netzabschnitt eingespeiste Leistung verdoppelt wird (also um 100% erhöht), und sich als Folge die Netzspannung an dem Referenzpunkt in diesem Netzabschnitt um wenigstens 10% erhöht (100%/10%=10).

Eine lokale Spannungsweichheit liegt besonders auch dann vor, wenn der Netzabschnitt eine vergleichsweise hohe Impedanz aufweist.

Der Fachmann unterscheidet zwischen spannungsprägenden und stromprägenden Einspeisern. Bei spannungsprägenden Einspeisern steht als Regelungsziel im Vordergrund, beim Einspeisen eine Spannung, nämlich Netzspannung bzw. Einspeisespannung zu halten oder vorzugeben. Bei stromprägenden Einspeisern steht als Regelungsziel im Vordergrund, einen vorgegebenen Strom einzuspeisen. Direkt mit dem elektrischen Versorgungsnetz gekoppelte Synchrongeneratoren verhalten sich bedingt durch die physikalischen Eigenschaften des Synchrongenerators als spannungsprägende Einspeiser, wohingegen sich umrichtergeführte Einspeiser, besonders Windenergiesysteme oder PV-Anlagen, typischer Weise stromprägend verhalten.

Ein geringer Grad an spannungsprägenden Einspeisern liegt an dem Netzabschnitt vor, wenn ein Verhältnis der insgesamt durch die spannungsprägenden Einspeiser eingespeiste Leistung zu der insgesamt durch alle Einspeiser in den Netzabschnitt eingespeisten Leistung unter einem Referenzverhältnis liegt, das insbesondere kleiner als 0,2 ist, insbesondere kleiner als 0,1 ist.

Somit liegt hier das Phänomen bzw. die Situation vor, dass das elektrische Versorgungsnetz insgesamt zwar netzstarr sein kann, in einem Netzabschnitt aber, nämlich dem, an den auch der Netzanschlusspunkt angeschlossen ist, ein frequenzweiches Netz, also ein frequenzweicher Netzabschnitt, vorliegt. Ein solcher lokal frequenzweicher Netzabschnitt, was hier als lokale Frequenzweichheit bezeichnet wird, kann sich dadurch ergeben, dass dieser Netzabschnitt einen hohen Anteil umrichtergeführter Einspeiser aufweist.

Daher wird vorgeschlagen, abhängig von der lokalen Frequenzweichheit wenigstens eine Stromgrenze zu wählen und/oder die Blindstromsteigung davon abhängig zu wählen, um dadurch die Regelfähigkeit des umrichtergeführten Einspeisers anzupassen.

Das Verhältnis der Amplitude der Schwingung der Netzfrequenz am Netzanschlusspunkt zur Amplitude der Schwingung der Netzfrequenz am Referenzpunkt kann ein Maß der lokalen Frequenzweichheit bilden. Vorzugsweise wird vorgeschlagen, abhängig von diesem Maß der lokalen Frequenzweichheit die wenigstens eine Stromgrenze und außerdem oder alternativ die Blindstromsteigung festzulegen. Dadurch kann die Regelfähigkeit des umrichtergeführten Einspeisers entsprechend eingestellt werden. Insbesondere wird vorgeschlagen, dass die Blindstromobergrenze umso geringer gewählt wird, je größer das Maß der lokalen Frequenzweichheit ist, um dadurch noch eine entsprechend ausreichende Stellfähigkeit der Wirkleistungseinspeisung zu gewährleisten. Sinngemäß kann somit außerdem oder alternativ die Wirkstromuntergrenze umso höher eingestellt werden, je größer das Maß der lokalen Frequenzweichheit ist.

Da mit einem frequenzweichen Netzabschnitt auch ein spannungsweicher Netzabschnitt einhergehen kann, wird gemäß einer Variante vorgeschlagen, die Bildstromstellfähigkeit bei wirkstrompriorisierter Fahrweise umso weniger einzuschränken, je größer das Maß der lokalen Frequenzweichheit ist. Entsprechend wird die Wirkstromobergrenze umso niedriger eingestellt, je größer das Maß der lokalen Frequenzweichheit ist, oder die Blindstromuntergrenze wird umso höher eingestellt.

Gemäß einer Ausführungsform wird vorgeschlagen, dass die Blindstromstatik, insbesondere die Blindstromsteigung der Blindstromstatik, in Abhängigkeit von der Netzstarrheit vorgegeben wird, insbesondere im Fehlerfall. Hier wird besonders die absolute Netzstarrheit berücksichtigt, die oben bereits definiert wurde. Hier wurde erkannt, dass die Blindstromstatik entsprechend der Netzstarrheit angepasst werden kann, um eine angemessene Blindstromregelung zu erreichen. Diese Blindstromregelung kann besonders durch die Blindstromsteigung der Blindstromstatik angepasst werden. Es kommen aber auch andere Veränderungen der Blindstromstatik in Betracht, insbesondere kann ein Totbandbereich verändert werden, der somit dann auch in Abhängigkeit von der Netzstarrheit verändert werden kann.

Die Blindstromsteigung der Blindstromstatik kann in Abhängigkeit von der lokalen Frequenzweichheit, insbesondere in Abhängigkeit von einem Maß der lokalen Frequenzweichheit, vorgegeben werden und dadurch kann unmittelbar das Blindstromregelverhalten des umrichtergeführten Einspeisers an die Situation des elektrischen Versorgungsnetzes angepasst werden.

Außerdem oder alternativ wird vorgeschlagen, dass die Blindstromstatik, insbesondere die Blindstromsteigung der Blindstromstatik, in Abhängigkeit von einem Anteil umrichtergeführter Einspeiser des elektrischen Versorgungsnetzes vorgegeben wird. Ein solcher Anteil umrichtergeführter Einspeiser, der besonders als Verhältnis aktuell durch alle Umrichter eingespeister Wirkleistung zu insgesamt eingespeister Wirkleistung definiert ist, lässt Rückschlüsse zu dem Verhalten des elektrischen Versorgungsnetzes zu und damit kann daran angepasst eine Blindstromregelung durch entsprechende Einstellung der Blindstromstatik vorgegeben werden.

Insbesondere wird vorgeschlagen, dass die Blindstromsteigung dem Betrage nach umso höher ist, je höher der Anteil umrichtergeführter Einspeiser ist. Hier liegt die Erkenntnis zugrunde, dass die Spannungsstützung durch die umrichtergeführten Einspeiser mittels der Blindstromstatik umso stärker sein sollte, je dominanter auch die umrichtergeführten Einspeiser sind. Bei einem kleinen Anteil umrichtergeführter Einspeiser ist eher davon auszugehen, dass die Spannungsstützung ohnehin durch andere Einheiten vorgenommen wird, insbesondere durch konventionelle Kraftwerke, die direkt mit dem elektrischen Versorgungsnetz gekoppelte Synchrongeneratoren aufweisen. Die Blindstromstatik umrichtergeführter Einspeiser wird dann im Wesentlichen zur Unterstützung benötigt, sodass eine schwache Blindstromregelung ausreichen kann.

Besonders wird vorgeschlagen, die Blindstromstatik im Fehlerbetrieb vorzugeben. Dabei wurde erkannt, dass besonders im Fehlerbetrieb eine entsprechende Mitwirkung der Regelung durch Blindleistungseinspeisung mittels der umrichtergeführten Einspeiser wichtig ist. Dabei wurde auch erkannt, dass umrichtergeführte Einspeiser insoweit eine sehr schnelle Regelfähigkeit haben, die hierbei eingesetzt werden kann. Hierdurch kann besonders eine Synergiewirkung mit der besonderen Art der Regelung im Fehlerbetrieb erreicht werden. Hier kann nämlich die Blindstromstatik zur Spannungsstützung angepasst werden, gegebenenfalls mit sehr steiler Blindstromsteigung, während gleichzeitig durch die vorgeschlagenen Stromgrenzen eine gute Regelfähigkeit erhalten bleibt, ohne dass die Priorisierung des Blindstroms eine Regelung durch den Wirkstrom verhindert bzw. umgekehrt.

Gemäß einer Ausführungsform wird vorgeschlagen, dass ein Umrichteranteil als Anteil umrichtergeführter Einspeiser für das elektrische Versorgungsnetz oder einen Teilabschnitt des elektrischen Versorgungsnetzes ermittelt wird. Es wurde vorstehend bereits erläutert, dass erkannt wurde, dass das einen Aufschluss über Eigenschaften des elektrischen Versorgungsnetzes bzw. des Teilabschnitts geben kann und das kann somit eine Grundlage für Einstellungen des verwendeten umrichtergeführten Einspeisers bilden.

Der Umrichteranteil für das elektrische Versorgungsnetz bzw. den Teilabschnitt kann ein Verhältnis der aktuell eingespeisten Wirkleistung aller umrichtergeführten Einspeiser zu der aktuell insgesamt eingespeisten Wirkleistung bezeichnen. Dadurch kann immer die aktuelle Situation im elektrischen Versorgungsnetz in Bezug auf den Umrichteranteil im elektrischen Versorgungsnetz berücksichtigt werden.

Alternativ kann der Umrichteranteil für das elektrische Versorgungsnetz bzw. den Teilabschnitt ein Verhältnis der durch alle umrichtergeführten Einspeiser einspeisbaren Wirkleistung zu der durch alle Einspeiser einspeisbaren Wirkleistung bezeichnen. Als einspeisbare Wirkleistung kann hier die Nennleistung des jeweiligen Einspeisers verwendet werden, sodass der Umrichteranteil somit ein Verhältnis der Summe der Nennleistungen aller umrichtergeführten Einspeiser zur Summe der Nennleistungen aller Einspeiser bezeichnet. Den Umrichteranteil als ein solches Verhältnis einspeisbarer Leistungen zu berücksichtigen kann zwar den Nachteil haben, aktuelle Situationen nicht genau wiederzugeben, dafür ist es eine feste Größe, die somit auch leicht ermittelt werden kann. Gegebenenfalls kann ein Anpassungsfaktor berücksichtigt werden, wenn aufgrund des vorherrschenden Windes und/oder der vorherrschenden Sonneneinstrahlung mit einer entsprechend geringen Leistung der umrichtergeführten Einspeiser gerechnet werden kann. Es ist dabei zu berücksichtigen, und das wurde hier auch erkannt, dass umrichtergeführte Einspeiser zunehmend auch über elektrische Speicherkapazität verfügen. In diesem Fall kann trotz aktuell geringer Wirkleistungseinspeisung die einspeisbare Leistung besonders für Stützmaßnahmen relevant sein und aufgrund des elektrischen Speichers auch - zumindest kurzfristig - abrufbar und verfügbar sein.

Abhängig von dem Umrichteranteil wird vorgeschlagen, dass das Vorgeben wenigstens einer der Stromgrenzen nur erfolgt, wenn der Umrichteranteil einen vorbestimmten Mindestumrichteranteil überschreitet und der Mindestumrichteranteil insbesondere wenigstens 50 % beträgt. Hier wurde besonders erkannt, dass bei einem geringen Umrichteranteil, besonders wenn dieser unter 50 % liegt, der Verlust der Wirkleistungsstellfähigkeit im Falle der blindleistungspriorisierten Fahrweise bzw. der Verlust der Blindleistungsstellfähigkeit im Falle der wirkleistungspriorisierten Fahrweise hingenommen werden kann, da die übrigen Einspeiser somit über 50 % ausmachen und meist aufgrund ihrer Physik, nämlich besonders wenn sie jeweils einen direkt mit dem elektrischen Versorgungsnetz gekoppelten Synchrongenerator aufweisen, die fehlende Regelungsfähigkeit des umrichtergeführten Einspeisers ausgleichen oder zumindest auffangen können. Somit wurde erkannt, dass in diesem Fall die jeweils volle Stellfähigkeit des umrichtergeführten Einspeisers zur Verfügung gestellt werden kann, also bei blindleistungspriorisierter Fahrweise die volle Blindstromstellfähigkeit bis zur Scheinstromgrenze, und bei wirkstrompriorisierter Fahrweise die volle Wirkstromstellfähigkeit bis hin zur Scheinstromgrenze.

Erfindungsgemäß wird auch ein umrichtergeführter Einspeiser vorgeschlagen. Ein solcher ist insbesondere als Windenergiesystem, also als Windenergieanlage oder als Windpark, ausgestaltet, oder er ist als Speicher ausgestaltet. Es kommt auch in Betracht, dass ein Windenergiesystem mit einem Speicher kombiniert wird. Ein solcher umrichtergeführter Einspeiser, also gemäß jeder der genannten Ausführungsmöglichkeiten, ist vorbereitet zum Einspeisen elektrischer Leistung an einem Netzanschlusspunkt in ein eine Netzspannung aufweisendes elektrisches Versorgungsnetz. Der umrichtergeführte Einspeiser umfasst

- eine Einspeiseeinheit zum Einspeisen der elektrischen Leistung in das elektrische Versorgungsnetz in einem Normalbetrieb, wenn kein Netzfehler im elektrischen Versorgungsnetz erkannt wurde,

- eine Einspeisesteuerung zum Umschalten auf einen Fehlerbetrieb, wenn ein Netzfehler oder Störung erkannt wurde, bei dem sich die Netzspannung verringert, wobei der umrichtergeführte Einspeiser, insbesondere die Einspeisesteuerung, dazu vorbereitet ist, dass

- im Normalbetrieb

  - zur Einspeisung elektrischer Wirkleistung ein Wirkstrom eingespeist wird und

  - bei Bedarf zusätzlich elektrische Blindleistung durch einen Blindstrom eingespeist wird, wobei der Wirkstrom und der Blindstrom zusammen einen Scheinstrom ergeben, und

- im Fehlerbetrieb

  - zum Heben oder Senken der Netzspannung ($U_N$) zusätzlicher Blindstrom eingespeist wird oder dem Betrage nach erhöht wird, wobei

  - ein blindleistungspriorisierter Modus oder ein wirkleistungspriorisierter Modus verwendet wird und

  - der blindleistungspriorisierte Modus dadurch gekennzeichnet ist, dass

    - bei Bedarf der Wirkstrom so verringert wird, dass der Scheinstrom eine Scheinstromgrenze einhält, und

  - der wirkleistungspriorisierte Modus dadurch gekennzeichnet ist, dass

    - bei Bedarf der Blindstrom so begrenzt oder verringert wird, dass der Scheinstrom die Scheinstromgrenze einhält,

  wobei

  - im blindleistungspriorisierten Modus

    - für den Betrag des Blindstroms eine Blindstromobergrenze vorgegeben wird und/oder

    - für den Wirkstrom eine Wirkstromuntergrenze vorgegeben wird, bzw.

  - im wirkleistungspriorisierten Modus

    - für den Wirkstrom eine Wirkstromobergrenze und/oder

    - für den Blindstrom eine betragsmäßige Blindstromuntergrenze vorgegeben wird.

Eine Einspeiseeinheit kann besonders durch einen oder mehrere Umrichter oder Wechselrichter gebildet sein. Besonders können mehrere Wechselrichter über einen Gleichspannungszwischenkreis gespeist werden, von dem aus sie, besonders als Parallelschaltung, in das elektrische Versorgungsnetz einspeisen.

Die Einspeisesteuerung steuert diese Einspeiseeinheit und kann gegebenenfalls auch weitere Elemente steuern, wie den gesamten Betrieb einer Windenergieanlage, oder die Einspeicherung oder Ausspeicherung elektrischer Energie aus dem Speicher. Der Speicher kann besonders als elektrischer Speicher, insbesondere als Batteriespeicher ausgebildet sein. Die Steuerfunktionen können aber auch auf mehrere Elemente verteilt werden, sodass beispielsweise die Einspeisesteuerung nur die Einspeiseeinheit steuert und übrige Elemente des umrichtergeführten Einspeisers durch eine Betriebssteuerung gesteuert werden.

Die Einspeisesteuerung kann besonders auch zwischen Normalbetrieb und Fehlerbetrieb umschalten. Eine solche Umschaltung kann besonders softwaregesteuert durchgeführt werden, indem für den Normalbetrieb einerseits und den Fehlerbetrieb andererseits entsprechende Steuerprogramme oder Steuervorschriften angewendet werden. Unterschiedliche Stromgrenzen für Blindstrom und/oder Wirkstrom zu berücksichtigen, sei es als Ober- oder als Untergrenze, ist für einen bekannten Umrichter oder Wechselrichter ohne Weiteres möglich und auch üblich.

Vorzugsweise kann die Einspeiseeinheit als Wechselrichter ausgebildet sein, der über ein Toleranzbandverfahren gesteuert wird. Hierbei wird ein Toleranzband für einen Ausgangsstrom vorgegeben, der resultierende Ausgangsstrom gemessen und abhängig davon, wie dieser Ausgangsstrom in diesem vorgegebenen Toleranzband liegt, eine entsprechende Steuerung der Halbleiterschalter des Wechselrichters vorgenommen. Hierbei wird somit der Ausgangsstrom, auch im Zusammenhang mit der Ausgangsspannung, erfasst und damit liegt immer Kenntnis über den aktuellen eingespeisten Strom vor, einschließlich dem Wirkstromanteil und dem Blindstromanteil. Entsprechend können Wirkstrom und Blindstrom durch die entsprechende Vorgabe des Toleranzbandes vorgegeben und gesteuert werden.

Durch einen solchen umrichtergeführten Einspeiser können all die vorgenannten Möglichkeiten und Vorteile eines Verfahrens zum Einspeisen elektrischer Leistung umgesetzt werden.

Insbesondere wird vorgeschlagen, dass der umrichtergeführte Einspeiser, insbesondere seine Einspeisesteuerung, dazu vorbereitet ist, ein Verfahren gemäß einer der vorstehend beschriebenen Ausführungsformen umzusetzen. Dafür können diese Verfahren beispielsweise jeweils als Steuerprogramm hinterlegt sein.

Die Erfindung wird nun nachfolgend exemplarisch anhand von Ausführungsformen unter Bezugnahme auf die begleitenden Figuren näher erläutert.

Figur 1      zeigt eine Windenergieanlage in einer perspektivischen Darstellung.

Figur 2      zeigt einen Windpark in einer schematischen Darstellung.

Figur 3      zeigt ein Diagramm mit Leistungsverläufen, Spannungsverläufen und Stromverläufen bei einem Fehler gemäß dem Stand der Technik.

Figur 4      zeigt ein Diagramm mit Leistungsverläufen, Spannungsverläufen und Stromverläufen gemäß einer vorgeschlagenen Variante.

Figur 5      veranschaulicht verschiedene Betriebspunkte für einen Einspeisestrom in der komplexen Zahlenebene.

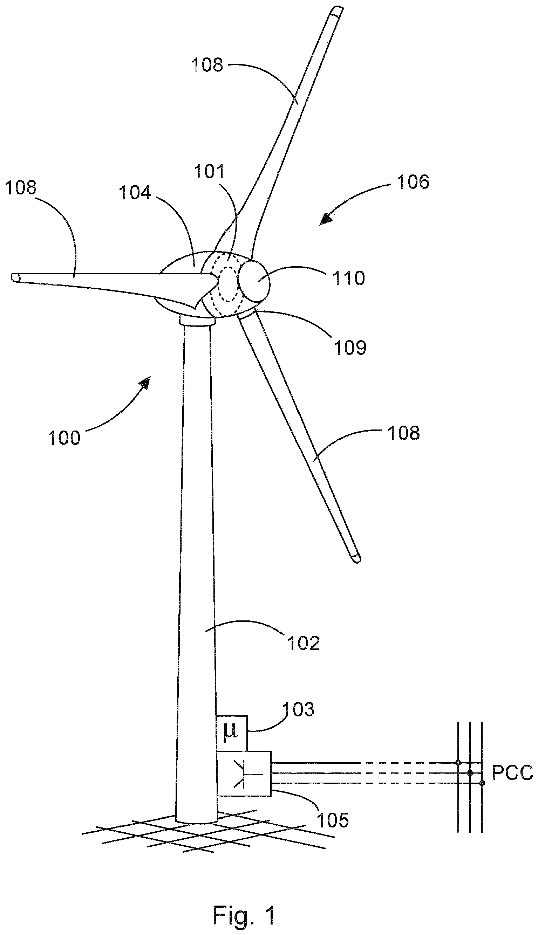

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

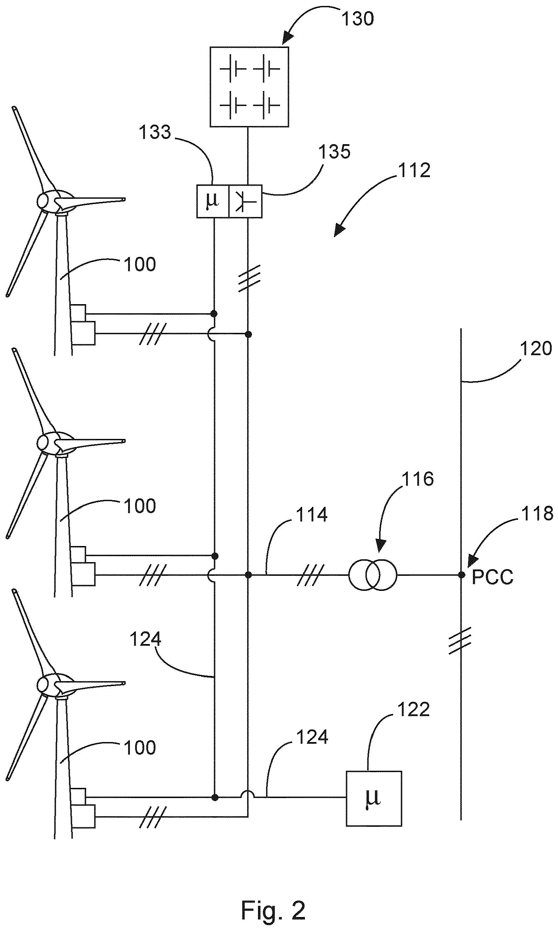

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

Figur 2 zeigt zudem einen Speicher 130, der auch mit den Windenergieanlagen 100 zusammen betrieben werden kann oder der auch alleine als umrichtergeführter Einspeiser verwendet werden kann. Dazu weist der Speicher 130 eine Einspeiseeinheit 135 auf, die über eine Speichersteuerung 133 gesteuert werden kann. Die Speichersteuerung 133 kann mit dem zentralen Parkrechner verbunden sein, um darüber angesteuert zu werden. Der Speicher 130, mit Einspeiseeinheit 135 und Speichersteuerung 133 kann auch selbständig, ohne die Windenergieanlagen 100 und ohne den zentralen Parkrechner 122 betrieben werden und bspw. an einem eigenen Netzanschlusspunkt in das elektrische Versorgungsnetz 120 einspeisen. Die Einspeiseeinheit 135 des Speichers 130 kann wie die Einspeiseeinheit 105 der Windenergieanlage 100 aufgebaut sein und entsprechend betrieben werden.

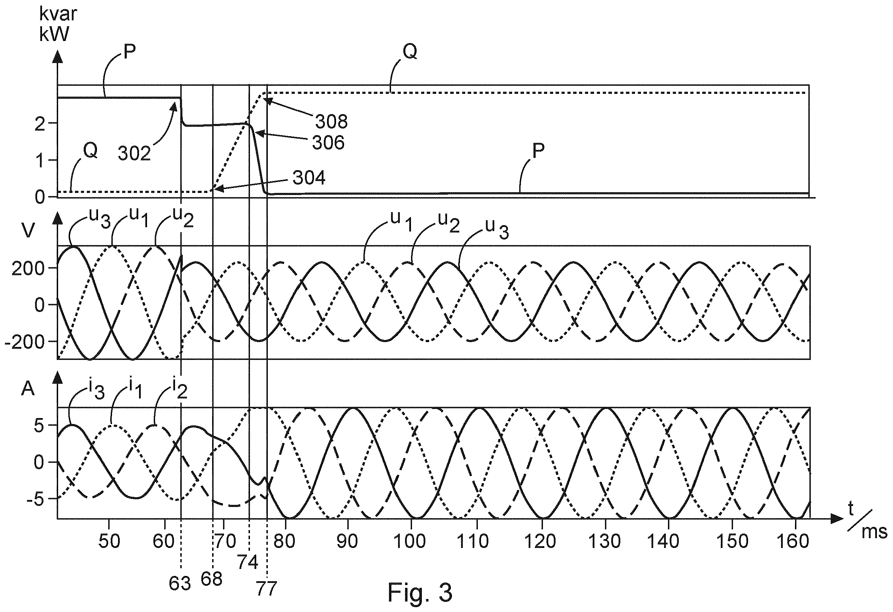

Figur 3 zeigt ein Diagramm mit drei Einzeldiagrammen. Das obere Diagramm zeigt einen Verlauf von Wirkleistung P und Blindleistung Q. Der mittlere Verlauf zeigt einen Netzspannungsverlauf für alle drei Netzphasen $u_1$, $u_2$ und $u_3$. Entsprechend zeigt das unterste Diagramm den Verlauf des eingespeisten dreiphasigen Stroms mit den drei Phasenströmen $i_1$, $i_2$ und $i_3$. An dem unteren Diagramm ist zudem eine Zeitachse als Abszisse aufgetragen mit der Zeit in ms. Diese Zeitachse gilt für alle drei Teildiagramme.

Im mittleren Diagramm ist die Spannung in Volt aufgetragen, wobei es auf die absolute Amplitude weniger ankommt. Wichtiger ist die Veränderung der Amplitude. Und so ist etwa zum Zeitpunkt von 63 ms ein Spannungseinbruch zu erkennen, insbesondere bei der ersten Phasenspannung $u_1$ und der dritten Phasenspannung $u_3$. Die zweite Phasenspannung $u_2$ ist in dem Moment etwa bei null, sodass sich dort in dem Moment der Spannungseinbruch weniger bemerkbar macht. Ab diesem Zeitpunkt bei etwa 63 ms, also dem Start des Spannungseinbruchs, wird daher die Amplitude dieser drei Spannungen $u_1$, $u_2$ und $u_3$ heruntergesetzt, und insoweit liegt Figur 3 eine Simulation zugrunde, bei der besonders die Netzspannung in Gestalt der drei Phasenspannungen $u_1$, $u_2$ und $u_3$ vorgegeben ist. In dem mittleren Diagramm der Figur 3 ist zu erkennen, dass die Amplitude der Spannung bzw. der drei Einzelspannungen ab dem Zeitpunkt t bei 63 ms etwa um 50 % eingebrochen ist.

Die eingespeiste Wirkleistung P und die eingespeiste Blindleistung Q sind im oberen Diagramm mit der Einheit kW bzw. kvar eingezeichnet. Bei einem Spannungseinbruch bei 63 ms bricht somit sofort auch die Wirkleistung P entsprechend ein, was als Fehlereintritt 302 eingezeichnet ist. Vor dem Fehlereintritt 302 lag eine Situation vor, bei der keine Blindleistung Q eingespeist wurde. Ab Fehlereintritt 302 vergehen dann etwa 5 ms, bis zur Spannungsstützung ein Erhöhen einer Blindstromeinspeisung beginnt, nämlich von null an in dem gezeigten Fall. Das ist als Beginn der Blindstromerhöhung 304 eingezeichnet. Der Wirkstrom bleibt dabei zunächst auf konstantem Niveau, verändert seine Amplitude also nicht. Bei etwa 74 ms ist der Blindstrom Q dann so groß geworden, dass der Scheinstrom, der sich in bekanntem Maße aus dem Wirkstrom und dem Blindstrom zusammensetzt, einen Maximalwert erreicht hat. Das ist in dem oberen Diagramm der Figur 3 als Erreichen der Stromgrenze 306 eingezeichnet.

Die eingespeiste Blindleistung Q soll aber weiter erhöht werden und dazu wird, da der Maximalwert des Scheinstroms nicht überschritten werden darf, die Wirkleistung P dann abgesenkt, und zwar bis auf null. Etwa bei 77 ms hat die Blindleistung Q dann ihren maximalen Wert erreicht. Das ist als maximale Blindleistung 308 eingezeichnet. Die Wirkleistung P ist dann bei null angekommen. Somit wird der Blindstrom in seiner Amplitude dem maximalen Scheinstrom entsprechen.

In dem unteren Diagramm sind dazu die Stromverläufe zu erkennen. Vordem Fehlereintritt, also vor den 63 ms, ist zu erkennen, dass die drei Phasenströme $i_1$, $i_2$ und $i_3$ gegenüber den drei Phasenspannungen $u_1$, $u_2$ und $u_3$ keine Phasenverschiebung aufweisen. Spätestens zum Zeitpunkt bei 68 ms, also beim Beginn der Blindstromerhöhung 304, geht der Strom in einen Übergangsbereich über. Zum Zeitpunkt von 74 ms, also dem Zeitpunkt des Erreichens der Stromgrenze 306, hat zumindest in dem unteren Diagramm offensichtlich erkennbar der erste Phasenstrom $i_1$ einen Maximalwert erreicht. Ab dem Zeitpunkt von 77 ms, also wenn die maximale Blindleistung beim Bezugszeichen 308 erreicht ist, ist der Übergangsbereich der drei Phasenströme beendet und es ist zu erkennen, dass etwa eine Phasenverschiebung um 90° zwischen den drei Phasenströmen $i_1$, $i_2$ und $i_3$ einerseits und den zugehörigen drei Phasenspannungen $u_1$, $u_2$ und $u_3$ andererseits vorliegt. Es wird also ausschließlich Blindleistung eingespeist.

Das Problem hierbei ist somit, dass die Wirkleistung P vollständig auf null abgefallen ist und damit keinerlei Beitrag mehr leisten kann. Weder kann sie einen Leistungsbeitrag zur Versorgung liefern, noch kann sie eine Stützwirkung entfalten, insbesondere eine frequenzstützende Wirkung kann sie dann nicht mehr entfalten.

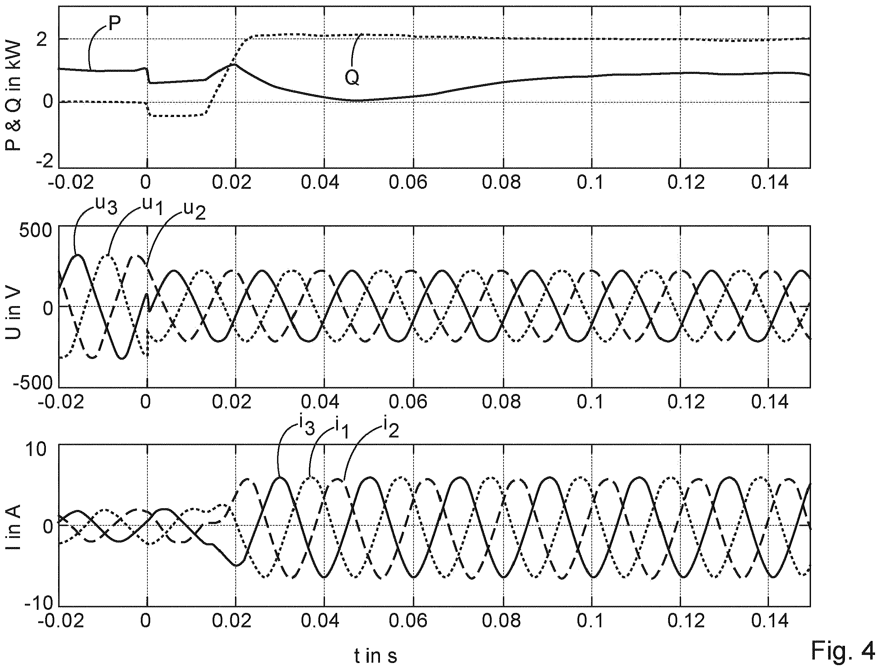

Figur 4 zeigt insoweit einen Verbesserungsvorschlag und die Diagramme der Figur 4 lehnen sich in der Art der Darstellung an die Diagramme der Figur 3 an. In Figur 4 tritt der Fehler zum Zeitpunkt t = 0 ein und auch hier ist besonders der Spannungseinbruch an der Spannung $u_1$ zu erkennen. Parallel ist hier auch noch ein Sprung der Spannungsphase zu erkennen. Die Wirkleistung P bricht dann sofort ein. In dem Übergangsbereich kann es auch zu einem veränderten Blindleistungswert, insbesondere durch den Sprung der Phase der äußeren Spannung kommen.

Etwa zum Zeitpunkt von 15 ms wird dann die Blindleistung Q erhöht. Die Wirkleistung P erhöht sich ebenfalls etwas, was auf den Versuch zurückzuführen ist, auch die Wirkleistung auszugleichen. Zum Zeitpunkt von etwa 20 ms wird dann auch eine Stromgrenze für den Scheinstrom erreicht, sodass zur weiteren Erhöhung des Blindstroms der Wirkstrom verringert wird. Somit steigt die Blindleistung Q weiter an, während die Wirkleistung P dann abfällt.

Abweichend zu Figur 3 liegt in Figur 4 auch ein Sprung in der Spannungsphase vor. Dieser führt zu dem gezeigten Abfall der Blindleistung Q und er kann auch zu einer zusätzlichen Verzögerung bei der Einspeisung führen, weil zunächst das Referenzsystem, also Frequenz und besonders die Phase der Netzspannung, gefunden werden muss, die Einspeisung also daran angepasst werden muss.

Hier wird nun aber vorgeschlagen, dass der Wirkstrom und damit die Wirkleistung nicht vollständig auf null abgesenkt werden soll. Dazu ist besonders in dem oberen Diagramm der Figur 4 zu erkennen, dass die Wirkleistung P wieder etwas ansteigt und schließlich, etwa bei 100 ms, einen - wenn auch niedrigeren - Endwert erreicht. Es ist zu erkennen, dass parallel dazu die Blindleistung Q nur unwesentlich abfällt. Somit konnte erreicht werden, dass Regelungspotential durch die Wirkleistung P vorhanden bleibt, die spannungsstützende Wirkung der Blindleistung Q gleichwohl nicht nennenswert beeinträchtigt wird.

In Figur 4 ist zudem eine Wartezeit implementiert, so dass die Wirkleistung zunächst auf 0 abfällt und dann erhöht wird, nämlich so, dass der Wirkstrom die Wirkstromuntergrenze erreicht oder überschreitet.

Es ist aus der Figur 4 auch zu erkennen, dass die dort vorgestellte Lösung es schafft, die Spannung zwar durch einen zusätzlichen Blindstrom zu stützen, aber ohne dass es dabei zu einer dauerhaften Absenkung der Wirkleistung kommt.

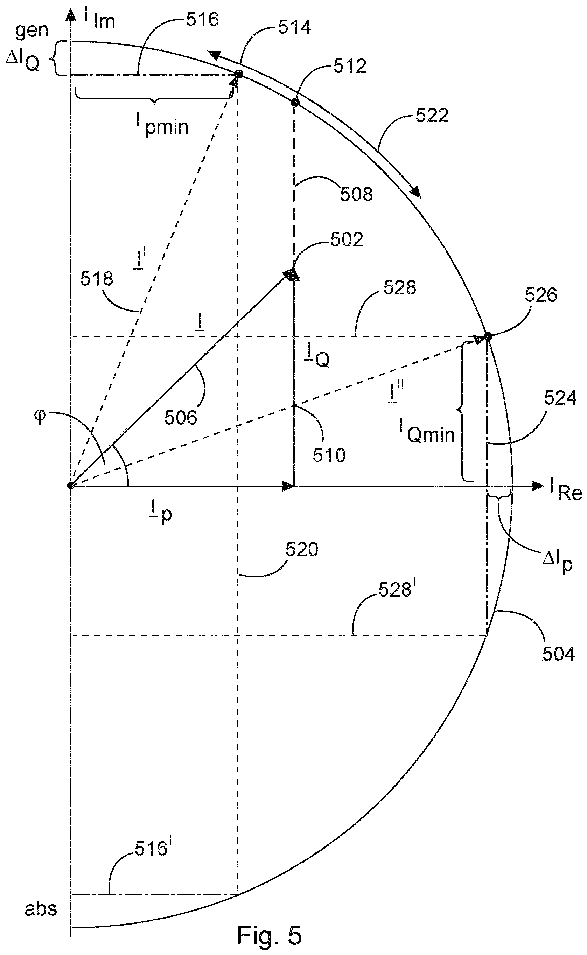

Figur 5 veranschaulicht in einem Diagramm in der komplexen Zahlenebene das Verfahren zum Einspeisen elektrischer Leistung unter Darstellung verschiedener Scheinströme, die auch als Gesamtströme oder Einspeiseströme bezeichnet werden können. Der beispielhafte Scheinstrom $I$ setzt sich zusammen aus einem Wirkstrom $I_P$ und dem Blindstrom $I_Q$. Die Spitze des Stromzeigers des Scheinstroms $I$ gibt somit den aktuellen Arbeitspunkt 502 des aktuellen Einspeisens elektrischer Leistung mittels des umrichtergeführten Einspeisers an. Weiterhin ist als Halbkreis eine Scheinstromgrenze 504 eingezeichnet. Über den Wert der Scheinstromgrenze 504 darf der Betrag des Scheinstroms nicht hinausgehen, da anderenfalls Sicherheitsschalter auslösen würden. Der Scheinstrom 1 bzw. der für ihn eingezeichnete Scheinstromzeiger 506 darf somit maximal bis an den Halbkreis, der die Scheinstromgrenze 504 vorgibt, heranreichen.

Der Arbeitspunkt 502 stellt eine Situation im Normalbetrieb dar. Die Größe des Wirkstroms $I_P$ richtet sich dann im Wesentlichen nach der verfügbaren Windleistung, wenn der umrichtergeführte Einspeiser eine Windenergieanlage oder ein Windpark ist. Zu Veranschaulichungszwecken ist der Phasenwinkel φ relativ groß gewählt worden. Im Normalbetrieb, besonders wenn keine Spannungsstützung vorgesehen ist, kann dieser Phasenwinkel φ auch den Wert null aufweisen. Der Betrag des Blindstroms $I_Q$ wäre dann auch null.

Tritt nun ein Fehler auf, so schaltet der umrichtergeführte Einspeiser in den Fehlerbetrieb. Hier wird von einem Netzfehler oder einer Netzstörung ausgegangen, die zu einer Verringerung der Netzspannung führt. Die Verringerung der Netzspannung kann auch als Spannungseinbruch bezeichnet werden. Hier soll nun in dem Fehlerbetrieb von dem umrichtergeführten Einspeiser gegengesteuert werden. Das elektrische Versorgungsnetz soll also durch den umrichtergeführten Einspeiser gestützt werden.

Dafür wird im blindleistungspriorisierten Modus, der eine von zwei geschilderten Möglichkeiten im Fehlerbetrieb darstellt, die Blindleistung und damit der Blindstrom $I_Q$ dem Betrag nach erhöht werden. Insbesondere wird vorgeschlagen, dass diese Erhöhung innerhalb einer Reaktionszeit von insbesondere 5 ms veranlasst wird. Der Blindstrom $I_Q$ steigt dann an, was in dem Diagramm 5 als Blindstromanstieg 508 eingezeichnet ist, nämlich durch eine gestrichelte Linie, die quasi den Blindstrom $I_Q$ bzw. den ihm zugeordneten Blindstromzeiger 510 verlängert. Der Blindstrom $I_Q$ kann aber maximal bis zum Erreichen der Scheinstromgrenze 504 erhöht werden. Somit ergibt sich zunächst ein erster neuer Arbeitspunkt 512, der somit nämlich auf dem Halbkreis liegt, der die Scheinstromgrenze 504 angibt.

Um den Blindstrom nun noch weiter erhöhen zu können, müsste der Wirkstrom verringert werden. Der Arbeitspunkt könnte sich dann von dem ersten neuen Arbeitspunkt 512 aus entlang der Scheinstromgrenze 504, also entlang des eingezeichneten Halbkreises, bewegen. Das ist in Figur 5 als weitere Blindstromerhöhung 514 durch einen entsprechenden Pfeil entlang der Scheinstromgrenze 504 eingezeichnet. Es ist zu erkennen, dass sich dadurch der Blindstrom $I_Q$ noch weiter erhöhen kann. Der Wirkstrom Ip verringert sich dabei. Dabei ist auch zu erkennen, dass die Erhöhung des Blindstroms $I_Q$ vergleichsweise gering ist im Vergleich zur Verringerung des Wirkstroms $I_P$. Besonders bei sehr großen Blindströmen $I_Q$, deren Betrag fast den Wert der Scheinstromgrenze erreicht haben, müssen für weitere geringe Erhöhungen des Blindstroms sehr große Reduzierungen des Wirkstroms vorgenommen werden. Um das zu verhindern, kann eine Blindstromobergrenze 516 vorgesehen sein.

Wird der Blindstrom bis zu dieser Blindstromobergrenze 516 erhöht, ergibt sich der veränderte Scheinstrom $I'$ gemäß verändertem Scheinstromzeiger 518. Bis zum maximal möglichen Wert des Blindstroms bleibt eine Blindstromdifferenz $\Delta I_Q$, die aufgrund der Blindstromobergrenze 516 nicht erreicht werden kann. Dafür kann dadurch aber ein minimaler Wirkstrom $I_{Pmin}$ eingespeist werden, der um ein Vielfaches größer ist als die Blindstromdifferenz $\Delta I_Q$.

Somit wird durch Verzicht auf einen geringen Blindstromanteil ein großer Wirkstromanteil ermöglicht. Der minimale Wirkstrom $I_{Pmin}$ kann auch alternativ oder zusätzlich zu der Vorgabe der Blindstromobergrenze 516 als Wirkstromuntergrenze 520 angenommen werden. Der minimale Wirkstrom $I_{Pmin}$ wird somit gewährleistet, wenn der Blindstrom nicht die Blindstromobergrenze 516 überschreitet und/oder der Wirkstrom die Wirkstromuntergrenze 520 nicht unterschreitet.

Grundsätzlich kann auch ein Blindstrom aus dem elektrischen Versorgungsnetz zur Spannungsstützung entnommen werden. Das wird allgemein auch als "Absorption" bezeichnet werden, während die positive Einspeisung als "Generation" bezeichnet wird. Diese beiden Varianten sind in der Figur 5 als "abs" bzw. "gen" abgekürzt eingezeichnet. Entsprechend gibt es zu der Blindstromobergrenze 516 eine Blindstromobergrenze 516' für den Fall der Blindstromentnahme. Die entsprechend angepasste Blindstromobergrenze 516' ist somit ebenfalls dem Betrag nach nicht zu überschreiten.

Die vorstehenden Erläuterungen zu Figur 5 betrafen den blindleistungspriorisierten Modus, bei dem somit eine Blindleistungs- bzw. Blindstrompriorisierung vorliegt. Diese Blindstrompriorisierung ist allerdings durch die Blindstromobergrenze 516 bzw. 516' oder durch die Wirkstromuntergrenze 520 begrenzt.

In einem wirkleistungspriorisierten Modus wird die Wirkleistung bzw. der Wirkstrom priorisiert. Dennoch kann im Fehlerfall, wenn also in den Fehlerbetrieb geschaltet wird, zunächst zur Spannungsstützung der Blindstrom erhöht werden, nämlich beispielsweise auch von dem Arbeitspunkt 502 aus, gemäß dem Blindstromanstiegs 508 zum ersten neuen Arbeitspunkt 512.

Im wirkleistungspriorisierten Modus soll aber möglichst viel Wirkleistung eingespeist werden, um eine aktuell geforderte Wirkleistung auch soweit möglich zu halten. Verringert sich die Netzspannung und damit auch die Spannung, unter der eingespeist wird, führt das bei gleichbleibendem Wirkstrom zwangsläufig zu einer Verringerung der Wirkleistung. Um die Wirkleistung dann wieder auf den ursprünglichen Wert, soweit möglich, zu erhöhen, muss der Wirkstrom erhöht werden. Genau das wird im wirkleistungspriorisierten Modus vorgeschlagen. Somit wird dann, ausgehend von dem ersten neuen Arbeitspunkt 512, der Wirkstrom erhöht, wobei gleichzeitig der Blindstrom verringert wird, damit die Scheinstromgrenze 504 nicht überschritten wird. Der Arbeitspunkt bewegt sich dann entsprechend ausgehend von dem ersten neuen Arbeitspunkt 512 entlang des Halbkreises, der die Scheinstromgrenze 504 bildet, gemäß Figur 5 "nach unten". Entsprechend ist eine weitere Wirkstromerhöhung 522 als entsprechender Pfeil eingezeichnet, um diese Veränderung des Arbeitspunktes zu veranschaulichen.

Auch im wirkleistungspriorisierten Modus ist nun aber vorgesehen, dass der priorisierte Strom nicht bis auf 100 % steigen soll, mit der Konsequenz, dass der nicht priorisierte Strom, hier also der Blindstrom, nicht auf null reduziert wird. Dafür ist eine Wirkstromobergrenze 524 vorgegeben. Der Wirkstrom kann also so lange erhöht werden, bis er die Wirkstromobergrenze 524 erreicht. Der Blindstrom hat sich dabei entsprechend verringert und es stellt sich der neue Arbeitspunkt 526 ein. Es ergibt sich also der veränderte Scheinstrom I". Durch die Wirkstromobergrenze 524 konnte der Wirkstrom dabei nicht auf den maximalen Wert, nämlich auf den Wert der Scheinstromobergrenze, erhöht werden. Es verbleibt somit eine Wirkstromdifferenz $\Delta I_P$, die den Strom angibt, der nicht eingespeist werden kann.

Gleichzeitig wurde aber erreicht, dass der Blindstrom nur auf den Minimalblindstrom $I_{Qmin}$ abgesenkt wurde. Dabei ist der verbleibende oder minimale Blindstrom $I_{Qmin}$ um ein Vielfaches größer als die Wirkstromdifferenz $\Delta I_P$. Durch eine Beschränkung der Wirkstromerhöhung auf einen Wert nur wenig unter dem Maximalwert konnte somit die mögliche Einspeisung eines vergleichsweise großen Blindstroms dennoch sichergestellt werden. Das kann dadurch erreicht werden, dass der Wirkstrom maximal bis zur Wirkstromobergrenze erhöht wird, oder der Blindstrom nicht unter den Mindestblindstrom $I_{Qmin}$ abgesenkt wird, oder dass beide Kriterien eingehalten werden. Die Blindstromuntergrenze 528 begrenzt somit den Abfall des Blindstroms in dem entsprechenden Quadranten. Bei Blindstromentnahme kann entsprechend eine Blindstromuntergrenze 528' für die Blindstromentnahme gesetzt werden. Sie sollte dem Betrag nach nicht unterschritten werden. Die Wirkstromobergrenze 524 wirkt in diesem Quadranten, in dem Blindstrom aufgenommen wird, unverändert.

Somit wird eine Lösung vorgeschlagen, bei der sowohl eine blindleistungspriorisierte Fahrweise als auch eine wirkleistungspriorisierte Fahrweise in einem Fehlerfall, wenn die Netzspannung einbricht, durchgeführt werden kann, wobei gleichzeitig vermieden wird, dass der jeweils nicht priorisierte Strom, also der Wirkstrom, oder der Blindstrom, nicht zu stark abfällt, insbesondere nicht auf null abfällt.

Damit können besonders auch sogenannte FRT-Strategien verbessert werden, also Strategien, die dafür vorgesehen sind, einen Netzfehler zu durchfahren.

Besonders ist eine Idee, im Fehlerfall für eine blindstrompriorisierte Fahrweise und/oder für eine wirkstrompriorisierte Fahrweise, die auch synonym als blindstrompriorisierte Steuerung bzw. wirkstrompriorisierte Steuerung bezeichnet werden kann, dynamische Blindstrom- bzw. Wirkstromgrenzen zu ergänzen oder einen Mindestwirkstrom oder Mindestblindstrom festzulegen, wenn eine Blindstrompriorität oder Wirkstrompriorität vorliegt.

Die vorgeschlagenen Lösungen können für Windenergieanlagen eingesetzt werden, besonders für solche mit FACTS-Eigenschaften und parametrierter dynamischer Netzstützung. Sie können sowohl für Speicher als auch für Ladeinfrastruktur mit parametrierter dynamischer Netzstützung angewendet werden. Insbesondere sollte eine Verbesserung der Netzeigenschaften in spannungs- und frequenzweichen Netzen erreicht werden können. Das kann besonders durch die Anpassung der dynamischen Grenzen bzw. Mindestströme erreicht werden.

Besonders wurde hier auch eine Entwicklung einer Fehlerdurchfahrstrategie für Netze mit einer hohen Umrichterpenetration vorgeschlagen. Die vorgeschlagene Strategie zum Durchfahren eines Netzfehlers ist hier besonders auch für spannungs- und frequenzweiche Netze geeignet. Mitunter kann auch eine stabile Fehlererkennung und Netzstabilisierung zur Übernahme von Systemverantwortung durch den entsprechenden umrichtergeführten Einspeiser erreicht werden.

Es wurde erkannt, dass bekannte Verfahren zur Wirk- und Blindstrompriorisierung für Netze mit einer geringen regenerativen Penetration gut geeignet sind. Daraus ist der Gedanke entstanden, die genannten Betriebsmodi, nämlich sowohl den blindleistungspriorisierten Modus im Fehlerbetrieb als auch den wirkleistungspriorisierten Modus im Fehlerbetrieb um dynamischen Blindstrom oder dynamische Wirkstromgrenzen zu ergänzen.

Alternativ oder ergänzend kann auch ein Mindestwirkstrom bei einer Blindstrompriorität festgelegt werden, oder ein Mindestblindstrom bei einer Wirkstrompriorität.

## Patentansprüche

1. Verfahren zum Einspeisen elektrischer Leistung (P)

   - an einem Netzanschlusspunkt (118)
   - in ein eine Netzspannung (U) aufweisendes
   - elektrisches Versorgungsnetz (120)
   - mittels eines umrichtergeführten Einspeisers (100; 112; 130), insbesondere eines Windenergiesystems (100; 112) und/oder eines Speichers (133), umfassend die Schritte
   - Einspeisen der elektrischen Leistung (P) in das elektrische Versorgungsnetz (120) in einem Normalbetrieb, wenn kein Netzfehler oder keine Netzstörung im elektrischen Versorgungsnetz (120) erkannt wurde,
- Umschalten auf einen Fehlerbetrieb, wenn ein Netzfehler oder eine Netzstörung erkannt wurde, bei dem sich die Netzspannung ($U_N$) verringert oder vergrößert, wobei
- im Normalbetrieb

- zur Einspeisung elektrischer Wirkleistung (P) ein Wirkstrom ($I_P$) eingespeist wird und
- bei Bedarf zusätzlich elektrische Blindleistung (Q) durch einen Blindstrom ($I_Q$) eingespeist wird, wobei der Wirkstrom ($I_P$) und der Blindstrom ($I_Q$) zusammen einen Scheinstrom ($\underline{I}$) ergeben, und

- im Fehlerbetrieb

- zum Heben oder Senken der Netzspannung ($U_N$) zusätzlicher Blindstrom eingespeist wird oder dem Betrage nach erhöht wird, wobei
- ein blindleistungspriorisierter Modus oder ein wirkleistungspriorisierter Modus verwendet wird und
- der blindleistungspriorisierte Modus **dadurch gekennzeichnet ist, dass**

- bei Bedarf der Wirkstrom ($I_P$) so verringert wird, dass der Scheinstrom (I) eine Scheinstromgrenze (504) einhält, und

- der wirkleistungspriorisierte Modus **dadurch gekennzeichnet ist, dass**

- bei Bedarf der Blindstrom ($I_Q$) so begrenzt oder verringert wird, dass der Scheinstrom (I) die Scheinstromgrenze (504) einhält,

wobei

- im blindleistungspriorisierten Modus

- für den Betrag des Blindstroms ($I_Q$) eine Blindstromobergrenze vorgegeben wird und/oder
- für den Wirkstrom eine Wirkstromuntergrenze vorgegeben wird, bzw.

- im wirkleistungspriorisierten Modus

- für den Wirkstrom ($I_P$) eine Wirkstromobergrenze (524) und/oder
- für den Blindstrom ($I_Q$) eine betragsmäßige Blindstromuntergrenze (528) vorgegeben wird.

2. Verfahren nach Anspruch 1, **dadurch gekennzeichnet, dass**

- im Fehlerbetrieb vom blindleistungspriorisierten Modus in den wirkleistungspriorisierten Modus umgeschaltet wird, oder umgekehrt, insbesondere, dass
- beim Erreichen einer vorgegebenen ersten Stromgrenze, insbesondere einer Scheinstromgrenze, der Blindstromobergrenze oder der Wirkstromuntergrenze, vom blindleistungspriorisierten Modus in den wirkleistungspriorisierten Modus umgeschaltet wird, oder
- beim Erreichen einer vorgegebenen zweiten Stromgrenze, insbesondere der Scheinstromgrenze, der Wirkstromobergrenze oder der Blindstromuntergrenze vom wirkleistungspriorisierten Modus in den blindleistungspriorisierten Modus umgeschaltet wird.

3. Verfahren nach Anspruch 1 oder 2, **dadurch gekennzeichnet, dass** wenigstens eine der Stromgrenzen aus der Liste aufweisend

- die Blindstromobergrenze (516),
- die Wirkstromuntergrenze (520),
- die Wirkstromobergrenze (524) und
- die Blindstromuntergrenze (528)

dynamisch veränderbar ist, insbesondere

- in Abhängigkeit von einer als Eigenschaft des elektrischen Versorgungsnetzes (120) identifizierten Netzeigenschaft eingestellt wird, und/oder
- dass wenigstens eine der Stromgrenzen ab dem Umschalten auf den Fehlerbetrieb erst nach einer vorbestimmten Warteizeit eingestellt oder wirksam wird, und/oder
- dass wenigstens eine der Stromgrenzen an eine externe Einheit, insbesondere einen Netzbetreiber übertragen wird.

4. Verfahren nach einem der vorstehenden Ansprüche, **dadurch gekennzeichnet, dass** die Blindstromobergrenze (516) und/oder die Wirkstromuntergrenze (520) in Abhängigkeit von aktuell für den umrichtergeführten Einspeiser verfügbarer Wirkleistung (P) eingestellt wird.

5. Verfahren nach einem der vorstehenden Ansprüche, **dadurch gekennzeichnet, dass**

- im Fehlerbetrieb im blindleistungspriorisierten Modus eine Blindstromstatik vorgegeben wird, die einen Blindstrom ($I_Q$) in Abhängigkeit von der Netzspannung ($U_N$) vorgibt, wobei
- die Blindstromstatik, insbesondere außerhalb eines Totbandbereichs, einen linearen Zusammenhang zwischen der Netzspannung ($U_N$) und dem Blindstrom ($I_Q$) angibt, mit einer Blindstromsteigung, die ein Verhältnis einer Blindstromänderung zu einer zugehörigen Netzspannungsänderung bezeichnet,
- und der Blindstrom ($I_Q$) maximal bis zur Blindstromobergrenze (516) ansteigt, und/oder zum Einhalten eines maximal zulässigen Scheinstromes (I) ein eingespeister Wirkstrom ($I_P$) reduziert wird, wobei der Wirkstrom ($I_P$) nicht unter die Wirkstromuntergrenze (520) reduziert wird, wobei
- im Normalbetrieb ebenfalls eine Blindstromstatik mit einer Blindstromsteigung vorgegeben wird und die Blindstromsteigung im Fehlerbetrieb größer ist, als im Normalbetrieb.

6.  Verfahren nach einem der vorstehenden Ansprüche, **dadurch gekennzeichnet, dass**

    - für das elektrische Versorgungsnetz (120), ein Teilnetz, oder für einen lokalen Netzabschnitt, eine Netzstarrheit als Netzeigenschaft ermittelt wird, wobei

        - die Netzstarrheit ein Maß dafür ist, wie stark sich die Netzfrequenz (f) ändert als Reaktion auf eine Veränderung einer Leistungsbilanz im elektrischen Versorgungsnetz (120), wobei
        - eine Leistungsbilanz ein Verhältnis in das elektrische Versorgungsnetz (120), das Teilnetz, bzw. den lokalen Netzabschnitt eingespeister Leistung (P) zu daraus entnommener Leistung (P) bezeichnet, und insbesondere
        - die Netzstarrheit definiert ist als Quotient einer Netzfrequenzänderung zu einer Leistungsbilanzänderung, wobei

    - wenigstens eine Stromgrenze bzw. wenigstens eine der Stromgrenzen (516; 520; 524; 528) in Abhängigkeit von der Netzstarrheit eingestellt wird, wobei vorzugsweise

        - das elektrische Versorgungsnetz (120) bzw. das Teilnetz, oder der lokale Netzabschnitt in Abhängigkeit von der Netzstarrheit in ein weiches oder starres Netz klassifiziert wird und die wenigstens eine Stromgrenze in Abhängigkeit von dieser Klassifizierung eingestellt wird, und/oder dass
        - die wenigstens eine Stromgrenze (516; 520; 524; 528) in Abhängigkeit von einem Anteil umrichtergeführter Einspeiser des elektrischen Versorgungsnetzes (120) vorgegeben wird, und/oder dass
        - die Netzstarrheit in Abhängigkeit von einem Anteil umrichtergeführter Einspeiser des elektrischen Versorgungsnetzes (120) ermittelt wird.

7.  Verfahren nach einem der vorstehenden Ansprüche, **dadurch gekennzeichnet, dass**

    - in Abhängigkeit von einer lokalen Frequenzweichheit am Netzanschlusspunkt (118)

        - die wenigstens eine Stromgrenze (516; 520; 524; 528) gewählt wird, und/oder
        - eine bzw. die Blindstromsteigung einer bzw. der Blindstromstatik festgelegt wird, wobei

    - eine lokale Frequenzweichheit am Netzanschlusspunkt (118) vorliegt, wenn die Netzfrequenz am Netzanschlusspunkt (118) mit einer größeren Amplitude schwingt, als an einem Referenzpunkt des elektrischen Versorgungsnetzes (120), wobei
    - ein Verhältnis der Amplitude der Schwingung der Netzfrequenz am Netzanschlusspunkt (118) zur Amplitude der Schwingung der Netzfrequenz am Referenzpunkt ein Maß der lokalen Frequenzweichheit bildet und insbesondere
    - in Abhängigkeit von diesem Maß der lokalen Frequenzweichheit

        - die wenigstens eine Stromgrenze (516; 520; 524; 528) gewählt wird, und/oder
        - die Blindstromsteigung festgelegt wird.

8.  Verfahren nach einem der vorstehenden Ansprüche, **dadurch gekennzeichnet, dass**

    - eine bzw. die Blindstromstatik, insbesondere eine bzw. die Blindstromsteigung der Blindstromstatik,
    - in Abhängigkeit von einer bzw. der Netzstarrheit vorgegeben wird, insbesondere im Fehlerbetrieb, und/oder
    - in Abhängigkeit von einem Anteil umrichtergeführter Einspeiser des elektrischen Versorgungsnetzes (120) vorgegeben wird, insbesondere im Fehlerbetrieb.

9.  Verfahren nach einem der vorstehenden Ansprüche, **dadurch gekennzeichnet, dass**

    - ein Umrichteranteil als Anteil umrichtergeführter Einspeiser für das elektrische Versorgungsnetz (120) oder einen Teilabschnitt des elektrischen Versorgungsnetzes (120) ermittelt wird, wobei der Umrichteranteil für das elektrische Versorgungsnetz bzw. den Teilabschnitt

- ein Verhältnis der aktuell eingespeisten Wirkleistung aller umrichtergeführten Einspeiser zu der aktuell insgesamt eingespeisten Wirkleistung bezeichnet, oder
- ein Verhältnis der durch alle umrichtergeführten Einspeiser einpeisbaren Wirkleistung zur durch alle Einspeiser einspeisbaren Wirkleistung bezeichnet, insbesondere ein Verhältnis der Summe der Nennleistungen ($P_N$) aller umrichtergeführten Einspeiser zur Summe der Nennleistungen aller Einspeiser bezeichnet, wobei

das Vorgeben wenigstens einer der Stromgrenzen (516; 520; 524; 528) nur erfolgt, wenn der Umrichteranteil einen vorbestimmten Mindestumrichteranteil überschreitet und der Mindestumrichteranteil insbesondere wenigstens 50% beträgt.

10. Umrichtergeführter Einspeiser (100; 112; 130), insbesondere Windenergiesystem (100; 112) und/oder Speicher (130), zum Einspeisen elektrischer Leistung an einem Netzanschlusspunkt (118) in ein eine Netzspannung ($U_N$) aufweisendes elektrisches Versorgungsnetz (120), und der umrichtergeführte Einspeiser umfasst

- eine Einspeiseeinheit (105; 115) zum Einspeisen der elektrischen Leistung in das elektrische Versorgungsnetz (120) in einem Normalbetrieb, wenn kein Netzfehler im elektrischen Versorgungsnetz (120) erkannt wurde,
- eine Einspeisesteuerung (103; 133) zum Umschalten auf einen Fehlerbetrieb, wenn ein Netzfehler oder Störung erkannt wurde, bei dem sich die Netzspannung verringert, wobei der umrichtergeführte Einspeiser, insbesondere die Einspeisesteuerung, dazu vorbereitet ist, dass
- im Normalbetrieb

- zur Einspeisung elektrischer Wirkleistung (P) ein Wirkstrom ($I_P$) eingespeist wird und
- bei Bedarf zusätzlich elektrische Blindleistung (Q) durch einen Blindstrom ($I_Q$) eingespeist wird, wobei der Wirkstrom und der Blindstrom zusammen einen Scheinstrom (I) ergeben, und

- im Fehlerbetrieb

- zum Heben oder Senken der Netzspannung ($U_N$) zusätzlicher Blindstrom eingespeist wird oder dem Betrage nach erhöht wird, wobei
- ein blindleistungspriorisierter Modus oder ein wirkleistungspriorisierter Modus verwendet wird und
- der blindleistungspriorisierte Modus **dadurch gekennzeichnet ist, dass**
- bei Bedarf der Wirkstrom ($I_P$) so verringert wird, dass der Scheinstrom (I) eine Scheinstromgrenze (504) einhält, und

- der wirkleistungspriorisierte Modus **dadurch gekennzeichnet ist, dass**

- bei Bedarf der Blindstrom ($I_Q$) so begrenzt oder verringert wird, dass der Scheinstrom (I) die Scheinstromgrenze (504) einhält,

wobei

- im blindleistungspriorisierten Modus

- für den Betrag des Blindstroms eine Blindstromobergrenze (516) vorgegeben wird und/oder
- für den Wirkstrom eine Wirkstromuntergrenze (520) vorgegeben wird, bzw.

- im wirkleistungspriorisierten Modus

- für den Wirkstrom eine Wirkstromobergrenze (524) und/oder
- für den Blindstrom eine betragsmäßige Blindstromuntergrenze (528; 528') vorgegeben wird.

11. Umrichtergeführter Einspeiser (100; 112; 130) nach einem der vorstehenden Ansprüche, **dadurch gekennzeichnet, dass** der umrichtergeführte Einspeiser, insbesondere die Einspeisesteuerung dazu vorbereitet ist, ein Verfahren nach einem der Ansprüche 1 bis 9 auszuführen.

Fig. 1

Fig. 2

Fig. 3

EP 3 872 947 A1

Fig. 4

Fig. 5

Europäisches Patentamt

European Patent Office

Office européen des brevets

## EUROPÄISCHER RECHERCHENBERICHT

**Nummer der Anmeldung**

EP 21 15 6540

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2019/093634 A1 (BIRIS CIPRIAN [DK] ET AL) 28. März 2019 (2019-03-28) | 1-4,10, 11 | INV. H02J3/00 |
| Y | * Absätze [0008] - [0021], [0061], [0063] - [0072]; Abbildungen 1-4B * | 5 | H02J3/16 H02J3/18 |
| A |  | 6-9 | H02J3/38 |
| Y | US 2008/252076 A1 (FORTMANN JENS [DE] ET AL) 16. Oktober 2008 (2008-10-16) * Abbildung 6 * | 5 | |
| X | EP 2 696 070 A1 (MITSUBISHI HEAVY IND LTD [JP]) 12. Februar 2014 (2014-02-12) * Absatz [0048]; Abbildungen 4-7 * | 1-3 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 25. Juni 2021 | Ramcke, Ties |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 15 6540

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2021

| Im Recherchenbericht angeführtes Patentdokument | Datum der Veröffentlichung | Mitglied(er) der Patentfamilie | Datum der Veröffentlichung |
|---|---|---|---|
| US 2019093634 A1 | 28-03-2019 | EP 3462559 A1<br>US 2019093634 A1 | 03-04-2019<br>28-03-2019 |
| US 2008252076 A1 | 16-10-2008 | AT 487879 T<br>CN 1886593 A<br>DE 10344392 A1<br>DK 1668245 T3<br>EP 1668245 A2<br>ES 2354158 T3<br>US 2008252076 A1<br>WO 2005031160 A2 | 15-11-2010<br>27-12-2006<br>02-06-2005<br>28-02-2011<br>14-06-2006<br>10-03-2011<br>16-10-2008<br>07-04-2005 |
| EP 2696070 A1 | 12-02-2014 | CN 103429889 A<br>EP 2696070 A1<br>JP 5627529 B2<br>JP 2012217290 A<br>WO 2012137356 A1 | 04-12-2013<br>12-02-2014<br>19-11-2014<br>08-11-2012<br>11-10-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190093634 A1
- DE 10344392 A1